# EUROPEAN PATENT APPLICATION

(11) **EP 1 906 572 A1**
(43) Date of publication of application: **02.04.2008**
(21) Application number: 05780515.2
(22) Date of filing: 22.08.2005
(51) Int. Cl.: H04J 13/00, H04J 11/00, H04Q 7/38

(54) **BASE STATION DEVICE AND MOBILE STATION DEVICE**

(71) Applicant: MATSUSHITA ELECTRIC INDUSTRIAL CO., LTD., Osaka 571-8501 (JP)
(72) Inventor: NAKA, Katsuyoshi, Matsushita Electric Industrial Co., Ltd., 2-1-61, Shiromi, Chuo-ku, Osaka 540-6207 (JP); MATSUO, Hidenori, Matsushita Electric Industrial Co., Ltd., 2-1-61, Shiromi, Chuo-ku, Osaka 540-6207 (JP); HAGA, Hiroki, Matsushita Electric Industrial Co., Ltd., 2-1-61, Shiromi, Chuo-ku, Osaka 540-6207 (JP); HIRAMATSU, Katsuhiko, Matsushita Electric Industrial Co., Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2005/015232
(87) International publication number: WO 2007/023523

(57) **Abstract**

There are provided a base station device and a mobile station device for increasing the speed of cell search by introducing identification of TTI timing into the cell search. In the base station device (100), a frame configuration unit (120) forms a frame by arranging a TTI synchronization sequence (SCH1 sequence) used for identifying the frame timing and a TTI synchronization sequence (SCH2 sequence) used for identifying the TTI timing in such a manner that they are not superimposed on the same symbol specified by the frequency and the time. A radio transmission unit (145) sends the frame. The frame configuration unit (120) arranges the frame synchronization sequence at a predetermined position from the frame starting symbol and the TTI synchronization sequence at a predetermined position from the TTI starting symbol. The mobile station device (200) receiving the frame detects the TTI timing by using the TTI synchronization sequence.

## Description

### Technical Field

The present invention relates to a base station apparatus and mobile station apparatus, and more particularly to a base station apparatus and mobile station apparatus that perform multicarrier communication.

### Background Art

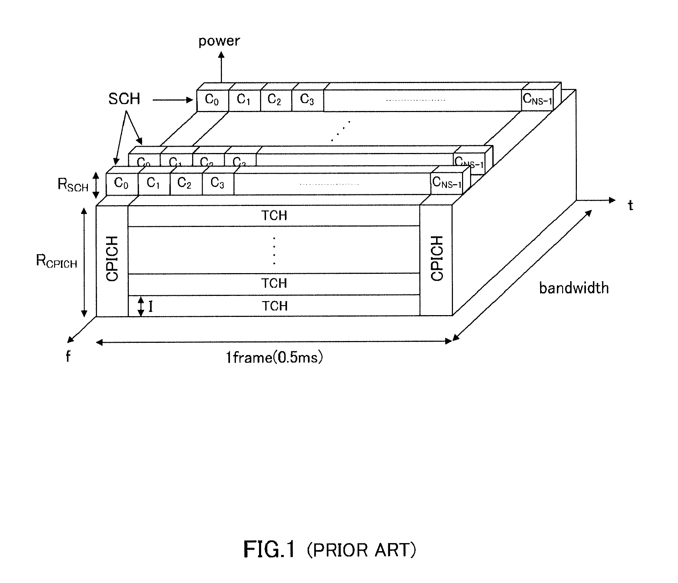

A method whereby a synchronization channel SCH is frequency-multiplexed has been proposed as a cell search method in OFCDM (see Non-patent Documents 1 and 2). First, a frame configuration diagram according to the prior art is shown in FIG.1. In this figure, TCH (Traffic Channel) indicates a normal data channel, and CPICH (Common Pilot Channel) indicates a common pilot channel that is a known signal. A synchronization channel, SCH (Synchronization Channel), is a known unique signal, and is frequency-multiplexed in stipulated subcarriers.

On the other hand, a receiving-side mobile station performs OFDM symbol timing detection, frame timing detection, and scrambling code identification by means of a three-step cell search algorithm. The operation of each step will be described in detail later herein.

### (1) First step: Symbol timing detection

A mobile station detects an OFDM symbol timing (that is, FFT window timing) using the correlation characteristics of OFDM guard intervals (Non-patent Document 3). Specifically, the guard interval correlation is calculated at each sample point for each OFDM symbol, this is averaged over one frame, and an OFDM symbol timing corresponding to the maximum correlation value is detected.

### (2) Second-step: Frame timing detection

FFT processing is performed based on the OFDM symbol timing detected in the first step, and the following processing is performed on the signal that has undergone FFT processing. Namely, in-phase addition is performed over one frame length on a subcarrier-by-subcarrier basis of the correlation between a subcarrier component in which an SCH is transmitted, among subcarrier components separated by the FTT, and an SCH replica. Then correlation detection values that have undergone in-phase addition on a subcarrier-by-subcarrier basis are further subjected to power addition in the frequency domain (that is, between a plurality of subcarriers) and the time domain (that is, between a plurality of frames), and an average correlation value is calculated. The timing at which the maximum average correlation value is calculated is detected, and is made a frame timing candidate.

### (3) Third step: Scrambling code identification

A CPICH multiplex symbol position is found by means of the frame timing detected in the second step. Thus, correlation is calculated using all scrambling code candidates that can be multiplied by the CPICH and a pilot signal replica. Then the scrambling code for which the maximum correlation value is calculated is detected, and is identified as being a cell-specific scrambling code.

Taking backward compatibility with WCDMA (UMTS) into consideration, a frame composed of a plurality of TTIs (Transmission Time Intervals) has been proposed as a radio frame that transmits an OFDM signal.
Non-patent Document 1: Yukiko Hanada, Hiroyuki Atarashi, Kenichi Higuchi, and Mamoru Sawahashi, "3-Step Cell Search Performance using frequency-multiplexed SCH for Broadband Multi-carrier CDMA Wireless Access," RCS2001-91, July 2001
Non-patent Document 2: Yukiko Hanada, Kenichi Higuchi, and Mamoru Sawahashi, "3-Step Fast Cell Search Method and Its performance for Broadband Multi-carrier CDMA Wireless Access," RCS2000-170, November 2000
Non-patent Document 3: 3GPP, R1-050484, Nortel, "Physical Channel Structures for Evolved UTRA"
Non-patent Document 4: 3GPP, R1-050464, NTT DoCoMo, "Proposal for the Downlink Multiple Access Scheme for E-UTRA (Update)"

### Disclosure of Invention

### Problems to be Solved by the Invention

However, although TTI timing can be used for frame timing detection when a frame having this kind of configuration is used in a cell search, no consideration whatever has been given to this point in the prior art.

It is an object of the present invention to provide a base station apparatus and mobile station apparatus that increase the speed of a cell search by introducing TTI timing identification into the cell search.

### Means for Solving the Problems

Abase station apparatus of the present invention performs multicarrier communication and employs a configuration that includes a frame forming section that forms a frame by mapping a frame synchronization sequence used for frame timing identification and a TTI synchronization sequence used for TTI timing identification such that the frame synchronization sequence and the TTI synchronization sequence do not overlap with each other in the same symbols specified by frequency and time, and a transmitting section that transmits the frame; wherein the frame forming section maps the frame synchronization sequence at a predetermined position from the frame starting symbol, and maps the TTI synchronization sequence at a predetermined position from the TTI starting symbol.

A mobile station apparatus of the present invention performs a cell search based on a frame transmitted from a base station apparatus, and employs a configuration that includes a receiving section that receives a frame in which a frame synchronization sequence used for frame timing identification is mapped at a predetermined position from the frame starting symbol and a TTI synchronization sequence used for TTI timing identification is mapped at a predetermined position from the TTI starting symbol, and the frame synchronization sequence and the TTI synchronization sequence are mapped such that the frame synchronization sequence and the TTI synchronization sequence do not overlap with each other in the same symbols specified by frequency and time, a correlation section that calculates correlations by sequentially multiplying all the frame synchronization sequence and the TTI synchronization sequence candidates by the frame, and a detection section that detects the frame timing and the TTI timing based on correlation values calculated by the correlation section.

### Advantageous Effect of the Invention

According to the present invention, a base station apparatus and mobile station apparatus can be provided that increase the speed of a cell search by introducing TTI timing identification into the cell search.

### Brief Description of Drawings

FIG.1 is a drawing showing a conventional frame configuration;
FIG.2 is a block diagram showing the configuration of a base station apparatus according to Embodiment 1 of the present invention;
FIG.3 is a drawing showing a frame configuration of Embodiment 1;
FIG.4 is a block diagram showing the configuration of a mobile station apparatus according to Embodiment 1;
FIG.5 is a flowchart explaining the operation of the mobile station apparatus in FIG.4;
FIG.6 is a drawing explaining the TTI timing and frame timing identification method in the mobile station apparatus in FIG.4;
FIG.7 is a block diagram showing the configuration of a mobile station apparatus according to Embodiment 2;
FIG.8 is a flowchart explaining the operation of the mobile station apparatus in FIG.7;
FIG.9 is a drawing explaining the TTI timing and frame timing identification method in the mobile station apparatus in FIG.7;
FIG.10 is a drawing showing a frame configuration of Embodiment 3;
FIG.11 is a drawing showing a frame configuration of Embodiment 4;
FIG.12 is a block diagram showing the configuration of a base station apparatus of Embodiment 5;
FIG.13 is a drawing showing a frame configuration of Embodiment 5;
FIG.14 is a block diagram showing the configuration of a mobile station apparatus of Embodiment 5;
FIG.15 is a flowchart explaining the operation of the mobile station apparatus in FIG.14;
FIG.16 is a drawing explaining the TTI timing and frame timing identification method in the mobile station apparatus in FIG.14;
FIG.17 is a block diagram showing the configuration of a base station apparatus of Embodiment 6;
FIG.18 is a drawing showing a frame configuration of Embodiment 6;
FIG.19 is a block diagram showing the configuration of a mobile station apparatus of Embodiment 6;
FIG.20 is a flowchart explaining the operation of the mobile station apparatus in FIG.19;
FIG.21 is a block diagram showing the configuration of a base station apparatus of Embodiment 7;
FIG.22 is a drawing showing a frame configuration of Embodiment 7;
FIG.23 is a block diagram showing the configuration of a mobile station apparatus of Embodiment 7;
FIG.24 is a block diagram showing the configuration of a base station apparatus of Embodiment 8;
FIG.25 is a drawing showing a frame configuration of Embodiment 8;
FIG.26 is a block diagram showing the configuration of a mobile station apparatus of Embodiment 8;
FIG.27 is a drawing showing a frame configuration of Embodiment 9;
FIG.28 is a drawing showing a frame configuration of Embodiment 10;
FIG.29 is a drawing showing a frame configuration of Embodiment 11;
FIG.30 is a drawing showing a frame configuration of Embodiment 12; and
FIG.31 is a drawing showing another frame configuration of Embodiment 12.

### Best Mode for Carrying Out the Invention

Embodiments of the present invention will now be described in detail with reference to the accompanying drawings.

### (Embodiment 1)

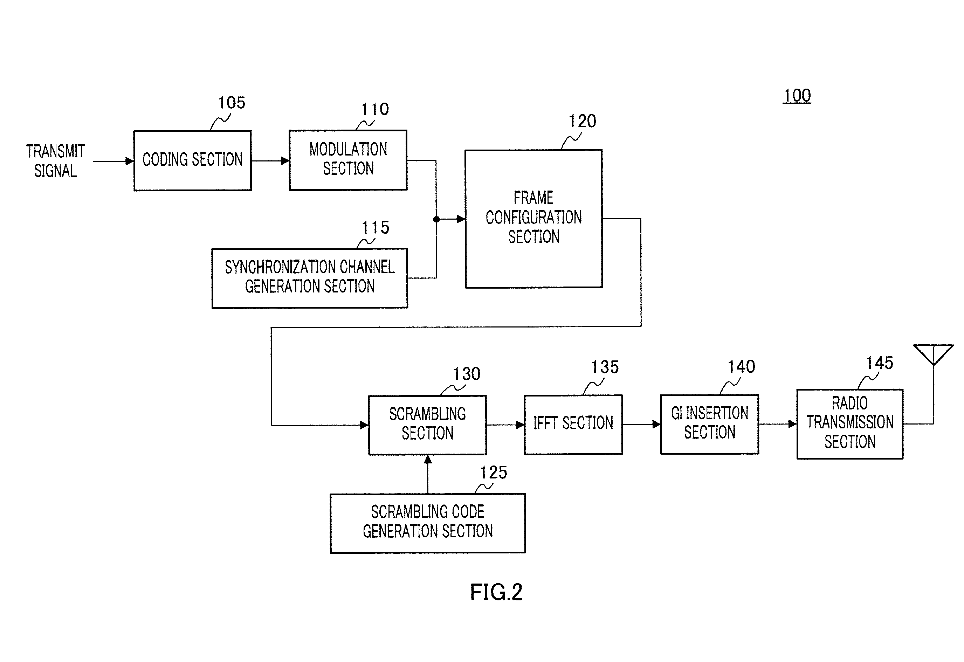

As shown in FIG.2, a base station apparatus 100 of Embodiment 1 has a coding section 105, a modulation section 110, a synchronization channel (SCH) generation section 115, a frame configuration section 120, a scrambling code generation section 125, a scrambling section 130, an IFFT section 135, a GI insertion section 140, and a radio transmission section 145.

Coding section 105 has a transmit signal as input, performs predetermined coding, and outputs a coded signal to modulation section 110.

Modulation section 110 has a coded signal from coding section 105 as input, and applies predetermined primary modulation to the coded signal. This primary modulation is generally performed according to the QoS (Quality of Service) and radio channel state. The coded signal is then output to frame configuration section 120.

Synchronization channel generation section 115 generates frame synchronization and TTI synchronization SCH sequences. In Embodiment 1, more particularly, a frame synchronization SCH1 sequence and TTI synchronization SCH2 sequence are generated. Also, in Embodiment 1, the length of the SCH1 sequence and SCH2 sequence is equal to the TTI length. Then the SCH sequences generated by synchronization channel generation section 115 are output to frame configuration section 120.

Frame configuration section 120 has the modulated signal from modulation section 110 as input, and also has the SCH sequences from synchronization channel generation section 115 as input, and forms a frame by mapping the modulated signal and SCH sequences on predetermined symbols specified by subcarriers (that is, frequency) and time.

In Embodiment 1, frame configuration section 120 has two different kinds of sequence - that is, an SCH1 sequence and SCH2 sequence-as input from synchronization channel generation section 115, and inserts the SCH sequences in one or more predetermined subcarriers. Frame configuration section 120 maps the modulated signal on symbols other than those in which the SCH sequences are mapped, and more particularly, in Embodiment 1, on subcarriers other than subcarriers in which the SCH sequences are mapped.

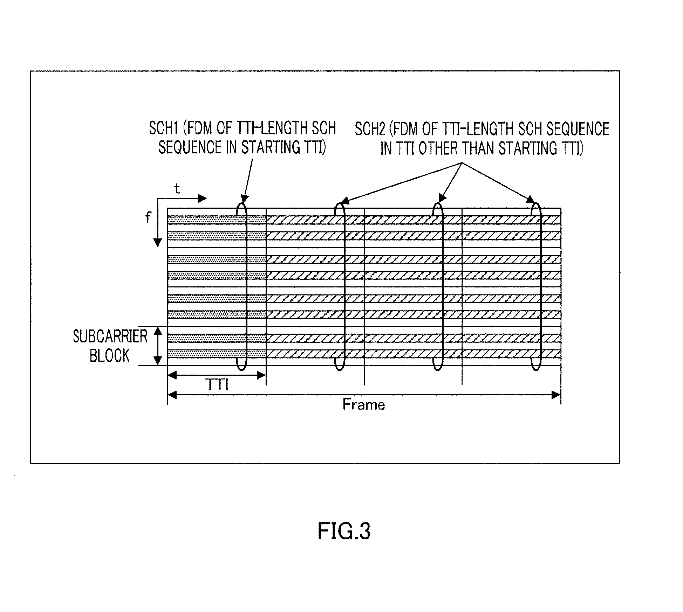

Specifically, as shown in FIG.3, in the same subcarrier, an SCH1 sequence used for frame synchronization by a mobile station apparatus described later herein is mapped in the time domain in the TTI at the start of a frame, and an SCH2 sequence used for TTI synchronization is mapped in the time domain in a TTI other than the TTI at the start of the frame. In the frame configuration shown in FIG.3, SCH sequences are mapped on two subcarriers of each subcarrier block. It is desirable for an SCH1 sequence and SCH2 sequence to have low mutual correlation, or to be uncorrelated.

Scrambling code generation section 125 generates a scrambling code according to a base-station-specific scrambling code number. The generated scrambling code is output to scrambling section 130.

Scrambling section 130 has the scrambling code from scrambling code generation section 125 as input, and also has the frame formed by frame configuration section 120 as input. Then, for each OFDM symbol, scrambling section 130 multiplies a symbol other than a symbol in which an SCH sequence is mapped by the scrambling code, and performs scrambling. The scrambled frame is output to IFFT section 135.

IFFT section 135 has transmit data scrambled by scrambling section 130 as input. IFFT section 135 converts an input frequency-domain signal to a time-domain signal and generates a multicarrier signal, and outputs the multicarrier signal to GI (Guard Interval) insertion section 140.

GI insertion section 140 copies part of an OFDM symbol data part (generally an end conglomeration of signal components) to the start of the OFDM symbol. By this means, a delayed wave countermeasure is implemented. After GI insertion, an OFDM symbol is output to radio transmission section 145.

Radio transmission section 145 has a post-guard-interval-insertion signal from GI insertion section 140 as input, performs RF processing such as up-conversion, and transmits the signal via an antenna.

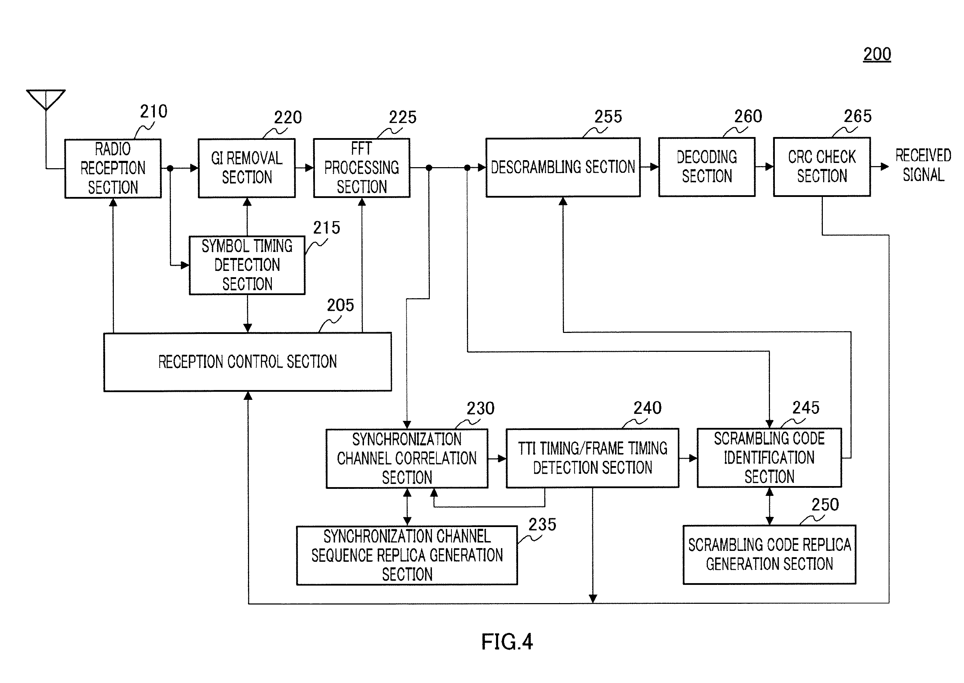

As shown in FIG.4, a mobile station apparatus 200 of Embodiment 1 has a reception control section 205, a radio reception section 210, a symbol timing detection section 215, a GI removal section 220, an FFT processing section 225, a synchronization channel correlation section 230, a synchronization channel sequence replica generation section 235, a TTI timing/frame timing detection section 240, a scrambling code identification section 245, a scrambling code replica generation section 250, a descrambling section 255, a decoding section 260, and a CRC check section 265.

Reception control section 205 performs control for the output destination of an output signal from radio reception section 210 and FFT processing section 225 according to the state of mobile station apparatus 200 - that is, according to which step of the initial cell search mode is in effect, or whether normal receive mode is in effect. Specifically, reception control section 205 controls the output destination of an output signal from radio reception section 210 and FFT processing section 225 by outputting an output destination directive signal to radio reception section 210 and FFT processing section 225. An output destination directive signal to radio reception section 210 indicates that symbol timing detection section 215 is the output destination when the state of mobile station apparatus 200 is the first step of the initial cell search mode, or indicates that GI removal section 220 is the output destination when the state of mobile station apparatus 200 is other than the first step. An output destination directive signal to FFT processing section 225 indicates that synchronization channel correlation section 230 is the output destination in the case of the second step of the initial cell search mode, or indicates that scrambling code identification section 245 is the output destination in the case of the third step of the initial cell search mode. In the case of normal receive mode, the signal indicates that descrambling section 255 is the output destination.

Radio reception section 210 receives a signal from base station apparatus 100 via an antenna, and performs RF processing such as down-conversion. Then radio reception section 210 outputs a signal that has undergone RF processing to the output destination indicated by the above-described output destination directive signal from reception control section 205.

Symbol timing detection section 215 has as input a signal that has undergone RF processing from radio reception section 210 when mobile station apparatus 200 is in the first step of the initial cell search mode. Symbol timing detection section 215 calculates guard interval correlation and detects OFDM symbol timing using the correlation characteristic of guard intervals in OFDM symbols. That is to say, this OFDM symbol timing is FFT window timing in order to perform FFT. Then symbol timing detection section 215 outputs the detected symbol timing result to GI removal section 220, and also outputs to reception control section 205 a first step end notification signal reporting that symbol timing has been detected - that is, the first step of the cell search has ended.

GI removal section 220 removes a guard interval from a received signal that has undergone RF processing in accordance with the OFDM symbol timing from symbol timing detection section 215, and outputs the signal to FFT processing section 225.

FFT processing section 225 has a received signal that has undergone guard interval removal from GT removal section 220 as input in OFDM symbol units, and executes FFT processing on this input signal. Then FFT processing section 225 outputs the signal that has undergone FFT processing to an output destination in accordance with the output destination directive signal from reception control section 205. Specifically, when the current state of mobile station apparatus 200 is the second step of a cell search, FFT processing section 225 has as input an output destination directive signal indicating that synchronization channel correlation section 230 is the output destination, and outputs the signal that has undergone FFT processing to synchronization channel correlation section 230. On the other hand, when the current state of mobile station apparatus 200 is the third step of a cell search, FFT processing section 225 has as input an output destination directive signal indicating that scrambling code identification section 245 is the output destination, and outputs a signal that has undergone FFT processing to scrambling code identification section 245. Alternatively, when an output destination directive signal other than an output destination directive signal indicating that synchronization channel correlation section 230 is the output destination or an output destination directive signal indicating that scrambling code identification section 245 is the output destination is input from reception control section 205, FFT processing section 225 outputs a signal that has undergone FFT processing to descrambling section 255.

Synchronization channel correlation section 230 has a received signal that has undergone FFT processing as input from FFT processing section 225, extracts one TTI length of subcarrier signals in which an SCH is multiplexed, calculates the time domain correlation between these extracted signals and two SCH sequence replicas (an SCH1 sequence replica and SCH2 sequence replica) input from synchronization channel sequence replica generation section 235, and calculates a correlation value by performing in-phase addition. Furthermore, synchronization channel correlation section 230 performs power combining of correlation values calculated for each predetermined subcarrier between subcarriers for each SCH1 sequence or for each SCH2 sequence, and outputs the correlation value power combining results for each symbol to TTI timing/frame timing detection section 240. These power combining results may hereinafter be referred to as the "SCH1 correlation value" and "SCH2 correlation value."

When TTI timing information has been input from TTI timing/frame timing detection section 240, correlation is calculated between an SCH1 sequence replica, SCH2 sequence replica, and extracted signal, and correlation value power combining is performed between subcarriers, only at that TTI timing. Then the correlation value at that TTI timing is fed back to TTI timing/frame timing detection section 240.

Synchronization channel sequence replica generation section 235 generates a frame synchronization channel SCH sequence decided upon in advance by the system, and outputs this to synchronization channel correlation section 230 as an SCH sequence replica. In Embodiment 1, since two different SCH sequences (an SCH1 sequence and SCH2 sequence) are included in a frame transmitted from base station apparatus 100, synchronization channel sequence replica generation section 235 generates an SCH1 sequence and SCH2 sequence and outputs these to synchronization channel correlation section 230.

TTI timing/frame timing detection section 240 has correlation values (after power combining) according to the SCH1 sequence and SCH2 sequence for each symbol timing in one TTI as input from synchronization channel correlation section 230, and detects the timing at which the maximum correlation value among the input correlation values is calculated, and the SCH sequence type (that is, whether the SCH sequence is an SCH1 sequence or SCH2 sequence).

If, as a result of this detection, an SCH1 sequence correlation value is the maximum correlation value, TTI timing/frame timing detection section 240 identifies the timing at which that maximum correlation value is calculated as frame timing. Then TTI timing/frame timing detection section 240 outputs the detected frame timing information to scrambling code identification section 245 and reception control section 205. On the other hand, if, as a result of this detection, an SCH2 sequence correlation value is the maximum correlation value, TTI timing/frame timing detection section 240 identifies the timing at which that maximum correlation value is calculated as TTI timing. Then TTI timing/frame timing detection section 240 outputs the detected TTI timing information to synchronization channel correlation section 230. After TTI timing has been detected, frame timing may be detected within the TTI timing, and therefore synchronization channel correlation section 230 need only calculate a correlation for detection of frame timing at the symbol timing that is TTI timing after receiving this TTI timing information as described above, enabling the amount of processing to be reduced.

Scrambling code identification section 245 has a received signal in which a CPICH (common pilot signal) is mapped at a predetermined position, such as the start of a frame, as input from FFT processing section 225. In addition, scrambling code identification section 245 has frame timing information as input from TTI timing/frame timing detection section 240, and a scrambling code replica as input from scrambling code replica generation section 250.

Then scrambling code identification section 245 extracts the CPICH from the received signal in accordance with the input frame timing information, forms CPICH replicas using all scrambling code replica candidates and the known pilot signal, calculates the correlations between the extracted CPICH and generated CPICH replicas, and identifies the scrambling code used when the CPICH replica for which the maximum correlation value is calculated is formed. The identified scrambling code is output to descrambling section 255.

Scrambling code replica generation section 250 generates scrambling code replicas for all candidates, and outputs these to scrambling code identification section 245.

Descrambling section 255 has a received signal as input from FFT processing section 225, and the scrambling code as input from scrambling code identification section 245. Then, descrambling section 255 performs descrambling of the received signal using this scrambling code, and outputs the descrambled signal to decoding section 260.

Decoding section 260 has the descrambled received signal as input, performs appropriate error correction decoding, and outputs the error correction decoding result to CRC check section 265.

CRC check section 265 performs a CRC error check on the error correction decoding result, and if there is no error, determines that the initial cell search has been completed. On the other hand, if there is an error, CRC check section 265 outputs the CRC error check result to reception control section 205, which should redo the initial cell search from the first step. On receiving this CRC error check result output when an error is present, reception control section 205 outputs an output destination directive signal to radio reception section 210 indicating that symbol timing detection section 215 is the output destination.

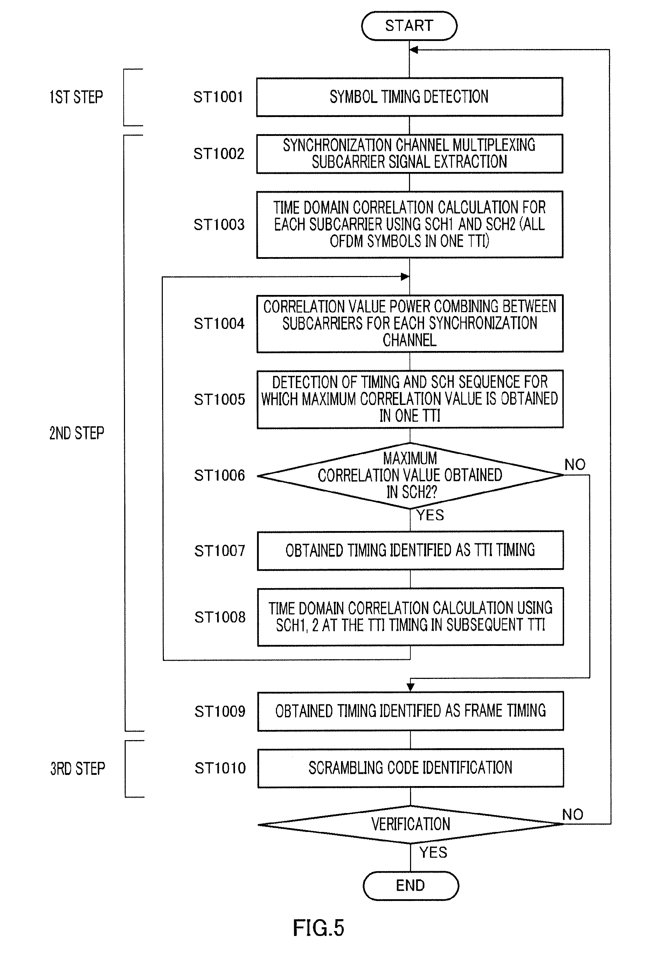

The operation of mobile station apparatus 200 will now be explained with reference to the flowchart in FIG. 5.

In step ST1001, symbol timing detection section 215 of mobile station apparatus 200 calculates the guard interval correlation, and detects the OFDM symbol timing using the correlation characteristics of OFDM guard intervals in OFDM symbols. This is the first step of the cell search.

In step ST1002, synchronization channel correlation section 230 extracts one TTI length of subcarrier signals in which an SCH is multiplexed.

In step ST1003, synchronization channel correlation section 230 calculates correlation between the signals extracted in step ST1002 and an SCH sequence replica. Specifically, since a frame used in Embodiment 1 is configured with an SCH1 sequence used for frame synchronization mapped in the time domain in the TTI at the start of the frame, and an SCH2 sequence used for TTI synchronization mapped in the time domain in a TTI other than the TTI at the start of the frame, synchronization channel correlation section 230 calculates the time domain correlation between the signals extracted in step ST1002 and two SCH sequence replicas (an SCH1 sequence replica and SCH2 sequence replica) for all symbols of one TTI.

In step ST1004, synchronization channel correlation section 230 performs correlation value power combining of the correlation values calculated for each predetermined subcarrier in step ST1003 between subcarriers for each SCH1 sequence or each SCH2 sequence.

In step ST1005, TTI timing/frame timing detection section 240 has correlation values (after power combining) according to the SCH1 sequence and SCH2 sequence for each symbol timing in one TTI as input from synchronization channel correlation section 230, and detects the timing at which the maximum correlation value among the input correlation values is calculated, and the SCH sequence type (that is, whether the SCH sequence is an SCH1 sequence or SCH2 sequence).

In step ST1006, TTI timing/frame timing detection section 240 determines whether or not the SCH sequence detected in step ST1005 for which the maximum correlation value was calculated is an SCH2 sequence, and performs processing according to the type of SCH sequence.

That is to say, if the result of the determination is that an SCH2 sequence correlation value is the maximum correlation value (step ST1006: YES), TTI timing/frame timing detection section 240 identifies the timing at which that maximum correlation value is calculated as TTI timing (step ST1007). Then TTI timing/frame timing detection section 240 outputs this TTI timing information to synchronization channel correlation section 230.

In step ST1008, on receiving TTI timing information from TTI timing/frame timing detection section 240, synchronization channel correlation section 230 calculates correlation between an SCH1 sequence replica, SCH2 sequence replica, and extracted signal only at the symbol timing that is TTI timing, and therefore calculates correlation between an SCH1 sequence replica, SCH2 sequence replica, and extracted signal at the next TTI timing. Then synchronization channel correlation section 230 performs correlation value power combining of the correlation values calculated for each predetermined subcarrier in step ST1008 between subcarriers for each SCH1 sequence or each SCH2 sequence. TTI timing/frame timing detection section 240 then compares the power-combined correlation value for the SCH1 sequence with the power-combined correlation value for the SCH2 sequence, and if the maximum correlation value is calculated for the SCH1 sequence, identifies this TTI timing as frame timing. Alternatively, if the maximum correlation value is calculated for the SCH2 sequence, TTI timing/frame timing detection section 240 continues to perform frame timing detection by comparing the power-combined correlation value for the SCH1 sequence at the next TTI timing, input from synchronization channel correlation section 230, with the power-combined correlation value for the SCH2 sequence.

On the other hand, if the result of the determination is that an SCH1 sequence correlation value is the maximum correlation value (step ST1006: NO), the timing at which that maximum correlation value is calculated is identified as frame timing (step ST1009).

In step ST1010, scrambling code identification section 245 extracts a CPICH from the received signal in accordance with input frame timing information, forms CPICH replicas using all scrambling code replica candidates and the known pilot signal, calculates the correlation between the extracted CPICH and generated CPICH replicas, and identifies the scrambling code used when the CPICH replica for which the maximum correlation value is calculated is formed. Then, descrambling is performed using the identified scrambling code, error correction decoding and a CRC check are performed, and verification is performed according to the CRC check result.

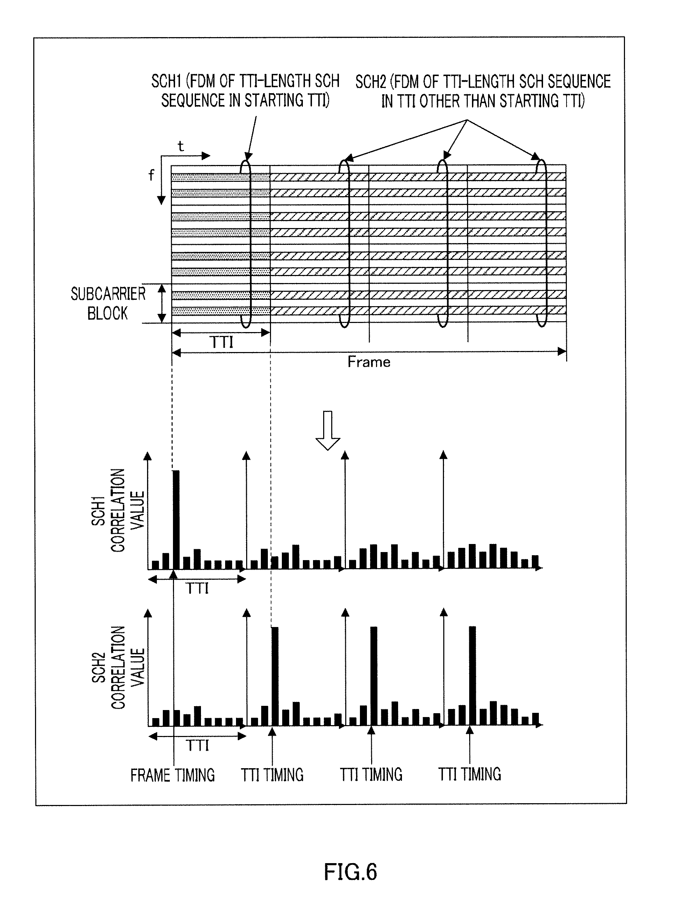

Above-described TTI timing and frame timing identification will now be explained visually with reference to FIG.6. In this figure, the upper diagram shows a frame of Embodiment 1, and the lower diagrams show SCH1 correlation values and SCH2 correlation values calculated for one TTI period when synchronization channel correlation section 230 extracts subcarrier signals of one TTI length at each symbol timing. In FIG. 6, one TTI is assumed to be composed of 8 symbols.

When, for example, synchronization channel correlation section 230 extracts subcarrier signals of one TTI length shown at the leftmost side of the lower diagrams in FIG.6 - that is, the extracted TTI period extending from the previous frame to the present frame - frame timing is present within that TTI period. Since a frame of Embodiment 1 is configured with an SCH1 sequence mapped in the time domain in the TTI at the start of the frame, and an SCH2 sequence mapped in the time domain in a TTI other than the TTI at the start of the frame, the SCH1 correlation value is largest at frame timing, and a large peak does not appear in the SCH2 correlation value. Therefore, for the subcarrier signals of one TTI length extracted by synchronization channel correlation section 230, when the maximum correlation value appears in the SCH1 correlation value and a large peak does not appear in the SCH2 correlation value, the symbol timing at which the maximum correlation value among the SCH1 correlation values appears can be identified as being frame timing and TTI timing.

Also, when, for example, synchronization channel correlation section 230 extracts subcarrier signals of one TTI length shown as the second from the left in the lower diagrams in FIG. 6 - that is, the extracted TTI period extending from the TTI at the start of a frame to the next TTI - TTI timing is present, but frame timing is not present, within that TTI period. Since a frame of Embodiment 1 is configured as described above, the SCH2 correlation value is largest at TTI timing, and a large peak does not appear in the SCH1 correlation value at this TTI timing. Therefore, for the subcarrier signals of one TTI length extracted by synchronization channel correlation section 230, when the maximum correlation value appears in the SCH2 correlation value and a large peak does not appear in the SCH1 correlation value, the symbol timing at which the maximum correlation value among the SCH2 correlation values appears can be identified as being TTI timing (however, this TTI timing is not frame timing). Since frame timing is also TTI timing, it is sufficient to confirm the SCH1 correlation value and SCH2 correlation value only for TTI timing after TTI timing is detected, and identify the timing at which the maximum correlation value among the SCH1 correlation values appears as frame timing.

Thus, according to Embodiment 1, base station apparatus 100 that performs multicarrier communication is equipped with a frame configuration section 120 that forms a frame by mapping a frame synchronization sequence (SCH1 sequence) used for frame synchronization and a TTI synchronization sequence (SCH2 sequence) used for TTI synchronization such that the frame synchronization sequence and the TTI synchronization sequence do not overlap with each other in the same symbols specified by frequency and time, and a transmitting section that transmits the frame; and frame configuration section 120 maps the frame synchronization sequence at a predetermined position from the frame starting symbol, and maps the TTI synchronization sequence at a predetermined position from the TTI starting symbol.

By this means, TTI timing can be detected from the position of a TTI synchronization sequence by the receiving side (in mobile station apparatus 200), and it is sufficient to confirm whether or not the timing is frame timing only for TTI timing after TTI timing is detected, enabling the time until frame timing is detected to be shortened, and the speed of a cell search to be increased.

Also, frame configuration section 120 forms a frame by mapping the frame synchronization sequence in the time domain aligned with the start of a frame starting TTI, and mapping the TTI synchronization sequence in the time domain aligned with the start of a TTI other than the frame starting TTI, in a predetermined plurality of subcarriers.

By this means, TTI timing can be detected directly from the position of a synchronization sequence by the receiving side (in mobile station apparatus 200), enabling the time until TTI timing is detected, and, by extension, the time until frame timing is detected, to be shortened, and the speed of a cell search to be increased.

Also, frame configuration section 120 forms a frame in which subcarriers in which the frame synchronization sequence and the TTI synchronization sequence are mapped are present in a proportion of at least one in a subcarrier block composed of a plurality of subcarriers.

By this means, both sequences are mapped on frequencies in a well-balanced manner, enabling resistance to frequency fading to be improved.

Furthermore, according to Embodiment 1, mobile station apparatus 200 that performs a cell search based on a frame transmitted from base station apparatus 100 is equipped with a radio reception section 210 that receives a frame in which a frame synchronization sequence (SCH1 sequence) used for frame synchronization is mapped at a predetermined position from a frame starting symbol and a frame synchronization sequence (SCH2 sequence) used for TTI synchronization is mapped at a predetermined position from a TTI starting symbol, and the frame synchronization sequence and the TTI synchronization sequence are mapped such that the frame synchronization sequence and the TTI synchronization sequence do not overlap with each other in the same symbols; a synchronization channel correlation section 230 that calculates correlations by sequentially multiplying all the frame synchronization sequence and TTI synchronization sequence candidates by the frame; and a TTI timing/frame timing detection section 240 that detects the frame timing and the TTI timing based on correlation values calculated by synchronization channel correlation section 230.

By this means, TTI timing can be detected from the position of a TTI synchronization sequence, and it is sufficient to confirm whether or not the timing is frame timing only for TTI timing after TTI timing is detected, enabling the time until frame timing is detected to be shortened, and the speed of a cell search to be increased.

Also, radio reception section 210 receives a frame in which, in a predetermined plurality of subcarriers, the frame synchronization sequence (SCH1 sequence) is mapped in the time domain aligned with the start of a frame starting TTI, and the TTI synchronization sequence (SCH2 sequence) is mapped in the time domain aligned with the start of a TTI other than the frame starting TTI; synchronization channel correlation section 230 extracts one TTI length of subcarrier signals in which the frame synchronization sequence and the TTI synchronization sequence are mapped from a received frame, performs the time domain multiplication of the extracted subcarrier signals by the relevant frame synchronization sequence and the TTI synchronization sequence, and calculates a correlation; and TTI timing/frame timing detection section 240 detects TTI timing based on the correlation value according to the TTI synchronization sequence, and detects frame timing based on the correlation value according to the frame synchronization sequence.

By this means, TTI timing can be detected directly from the position of a synchronization sequence, enabling the time until TTI timing is detected, and by extension the time until frame timing is detected, to be shortened, and the speed of a cell search to be increased.

Also, on detecting TTI timing that is not frame timing, TTI timing/frame timing detection section 240 outputs TTI timing information to synchronization channel correlation section 230, and synchronization channel correlation section 230 calculates correlation only at the TTI timing of the frame in accordance with the TTI timing information.

By this means, it is sufficient to confirmwhether or not the timing is frame timing only for TTI timing after TTI timing is detected, enabling the time until frame timing is detected to be shortened, and the speed of a cell search to be increased. Also, since it is sufficient to calculate correlation only for TTI timing after TTI timing is detected, the amount of processing can be reduced.

### (Embodiment 2)

In Embodiment 2, a case is assumed in which the propagation environment between a base station apparatus and mobile station apparatus is poor, and in the second step processing of an initial cell search, the mobile station apparatus performs correlation value averaging processing among a plurality of TTIs, or among a plurality of frames. The base station apparatus configuration and frame configuration are the same as in Embodiment 1.

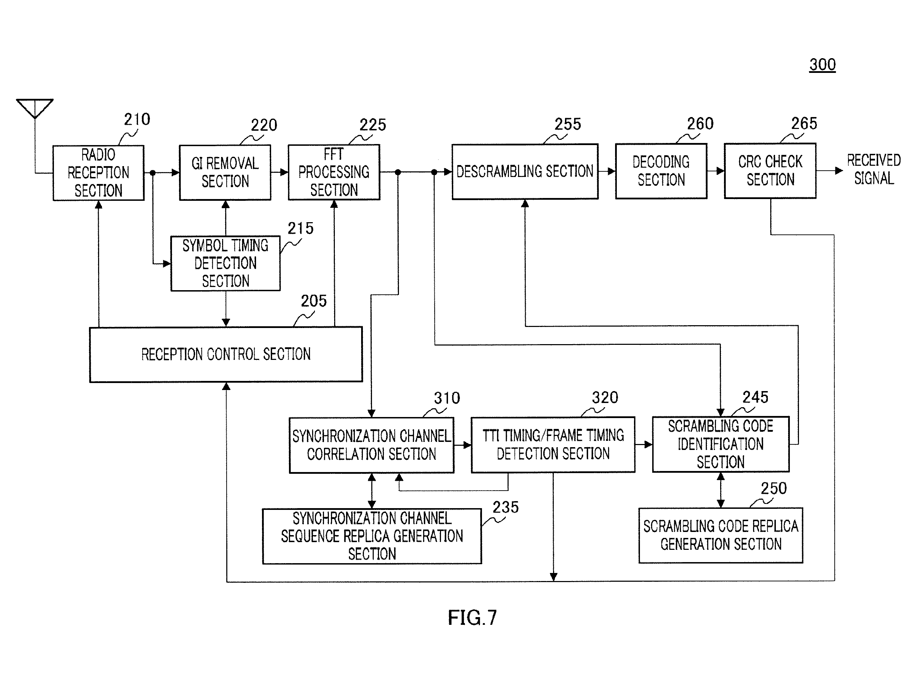

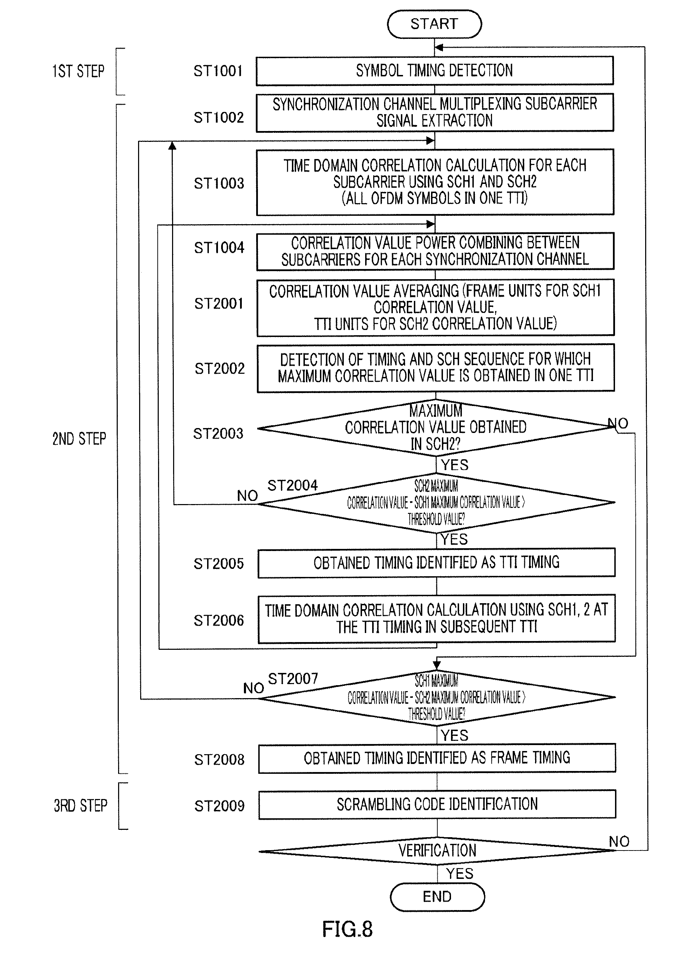

As shown in FIG.7, a mobile station apparatus 300 of Embodiment 2 has a synchronization channel correlation section 310 and a TTI timing/frame timing detection section 320, and operates as shown in FIG.8.

In steps ST1002 through ST1004, synchronization channel correlation section 310 performs the same kind of operations as synchronization channel correlation section 230 of Embodiment 1.

First, since there are no correlation values to be averaged in the first step, step ST2001 is skipped, and in step ST2002 TTI timing/frame timing detection section 320 has correlation values (after power combining) according to an SCH1 sequence and SCH2 sequence for each symbol timing in one TTI as input from synchronization channel correlation section 310, and detects the timing at which the maximum correlation value among the input correlation values is calculated, and the SCH sequence type (that is, whether the SCH sequence is an SCH1 sequence or SCH2 sequence).

In step ST2003, TTI timing/frame timing detection section 320 determines whether the SCH sequence detected in step ST2002 for which the maximum correlation value was calculated is an SCH1 sequence or SCH2 sequence, and performs processing according to the type of SCH sequence.

That is to say, if the result of the determination is that an SCH2 sequence correlation value is the maximum correlation value (step ST2003: YES), TTI timing/frame timing detection section 320 performs a comparison between the difference between the SCH2 sequence maximum correlation value and the maximum value among the SCH1 sequence correlation values, and a threshold value (step ST2004).

If the result of this comparison is that the difference between the SCH2 sequence maximum correlation value and the maximum value among the SCH1 sequence correlation values is greater than the threshold value (step ST2004: YES), TTI timing/frame timing detection section 320 identifies the timing at which the SCH2 sequence maximum correlation value was calculated as TTI timing (step ST2005). Then TTI timing/frame timing detection section 320 outputs TTI timing information to synchronization channel correlation section 310.

In step ST2006, on receiving TTI timing information from TTI timing/frame timing detection section 320, synchronization channel correlation section 310 calculates correlation between an SCH1 sequence replica, SCH2 sequence replica, and extracted signal only for symbol timing that is TTI timing, and therefore calculates correlation between an SCH1 sequence replica, SCH2 sequence replica, and extracted signal at the next TTI timing. Then synchronization channel correlation section 310 performs correlation value power combining of the correlation values calculated for each predetermined subcarrier in step ST2006 between subcarriers for each SCH1 sequence or each SCH2 sequence. TTI timing/frame timing detection section 320 then compares the power-combined correlation value for the SCH1 sequence with the power-combined correlation value for the SCH2 sequence, and determines whether or not the maximum correlation value is calculated for the SCH2 sequence. If the result of this determination indicates the SCH2 sequence, the processing flow proceeds to step ST2004 again. If the result of this determination indicates the SCH1 sequence, the processing flow proceeds to step ST2007.

If the result of the comparison is that the difference between the SCH2 sequence maximum correlation value and the maximum value among the SCH1 sequence correlation value is less than or equal to the threshold value (step ST2004: NO), the processing flow proceeds to step ST1003. Then the processing flow proceeds to step ST2001 via step ST1004, and synchronization channel correlation section 310 performs correlation value power averaging processing. This power averaging processing is performed in frame units for SCH1 sequence correlation values, and in TTI units for SCH2 sequence correlation values. Then the processing flow proceeds to the processing in step ST2002 and step ST2003. If mobile station apparatus 300 for which the propagation environment is poor cannot determine whether timing is frame timing or TTI timing in TTI units, its cell search performance can be improved by performing inter-TTI averaging or inter-frame averaging.

If the result of the determination in step ST2003 is that an SCH1 sequence correlation value is the maximum correlation value (step ST2003: NO), TTI timing/frame timing detection section 320 performs a comparison between the difference between the SCH1 sequence maximum correlation value and the SCH2 sequence maximum correlation value, and a threshold value (step ST2007).

If the result of this comparison is that the difference between the SCH1 sequence maximum correlation value and the SCH2 sequence maximum correlation value is greater than the threshold value (step ST2007: YES), TTI timing/frame timing detection section 320 identifies the timing at which the SCH1 sequence maximum correlation value was calculated as frame timing (step ST2008).

If the result of this comparison is that the difference between the SCH1 sequence maximum correlation value and the SCH2 sequence maximum correlation value is less than or equal to the threshold value (step ST2007: NO), the processing flow proceeds to step ST1003. Then the processing flow proceeds to step ST2001 via step ST1004, and synchronization channel correlation section 310 performs correlation value power averaging processing. This power averaging processing is performed in frame units for SCH1 sequence correlation values, and in TTI units for SCH2 sequence correlation values. Then the processing flow proceeds to the processing in step ST2002 and step ST2003.

In step ST2009, scrambling code identification section 245 extracts a CPICH from the received signal in accordance with input frame timing information, forms CPICH replicas using all scrambling code replica candidates and the known pilot signal, calculates the correlation between the extracted CPICH and generated CPICH replicas, and identifies the scrambling code used when the CPICH replica for which the maximum correlation value is calculated is formed. Then descrambling is performed using the identified scrambling code, error correction decoding and a CRC check are performed, and verification is performed according to the CRC check result.

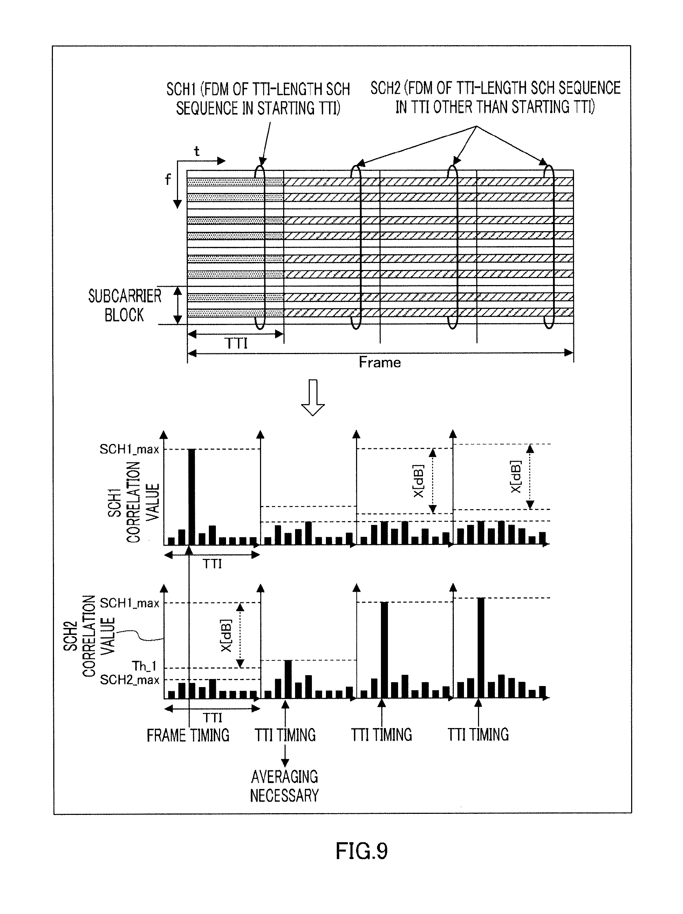

Above-described TTI timing and frame timing identification will now be explained visually with reference to FIG.9. In this figure, the upper diagram shows a frame of Embodiment 2, and the lower diagrams show SCH1 correlation value and SCH2 correlation value calculated for one TTI period when synchronization channel correlation section 310 extracts subcarrier signals of one TTI length at each symbol timing. In FIG. 9, one TTI is assumed to be composed of 8 symbols.

When, for example, the synchronization channel correlation section extracts subcarrier signals of one TTI length shown at the leftmost side of the lower diagrams in FIG . 9 - that is, TTI period extending from the previous frame to the present frame - frame timing is present within that TTI period. Since a frame of Embodiment 2 is configured with an SCH1 sequence mapped in the time domain in the TTI at the start of the frame, and an SCH2 sequence mapped in the time domain in a TTI other than the TTI at the start of the frame, the SCH1 correlation value is largest at frame timing, and a large peak does not appear in the SCH2 correlation value. Therefore, for the subcarrier signals of one TTI length extracted by synchronization channel correlation section 310, when the maximum correlation value appears in the SCH1 correlation value and a large peak does not appear in the SCH2 correlation value, the symbol timing at which the maximum correlation value among the SCH1 correlation values appears can be identified as being frame timing and TTI timing.

However, in Embodiment 2, the relevant timing is not simply identified as frame timing when an SCH1 sequence maximum correlation value appears, but instead, frame timing is only identified when the difference from the maximum value among the SCH2 sequence correlation values is greater than a predetermined threshold value - that is, when there is a certain degree of difference. By this means, the criterion for identifying frame timing is made more stringent, enabling the accuracy of frame timing identification to be improved.

Also, when, for example, the synchronization channel correlation section extracts subcarrier signals of one TTI length at the timing shown as the second from the left in the lower diagrams in FIG.9 - that is, timing extending from the TTI at the start of a frame to the next TTI - TTI timing is present, but frame timing is not present, within that TTI period. Since a frame of Embodiment 2 is configured as described above, the SCH2 correlation value is largest at TTI timing, and a large peak does not appear in the SCH1 correlation value at this TTI timing. Therefore, for the subcarrier signals of one TTI length extracted by synchronization channel correlation section 310, when the maximum correlation value appears in the SCH2 correlation value and a large peak does not appear in the SCH1 correlation value, the symbol timing at which the maximum correlation value among the SCH2 correlation values appears can be identified as being TTI timing (however, this TTI timing is not frame timing).

However, in Embodiment 2, the relevant timing is not simply identified as TTI timing when an SCH2 sequence maximum correlation value appears, but instead, TTI timing is only identified when the difference from the maximum value among the SCH2 sequence correlation values is greater than a predetermined threshold value - that is, when there is a certain degree of difference. By this means, the criterion for identifying TTI timing is made more stringent, enabling the accuracy of TTI timing identification to be improved.

In the above description, frame timing and TTI timing identification are performed according to the result of a comparison between the SCH1 sequence maximum correlation value and the SCH2 sequence maximum correlation value, and a threshold value, but this is not a limitation, and it is also possible to calculate a threshold value by subtracting a predetermined value from an SCH1 sequence or SCH2 sequence maximum correlation value, and to perform frame timing and TTI timing identification according to the result of a comparison between this threshold value and the maximum value among the SCH1 sequence or SCH2 sequence correlation values, whichever is not the one for which the maximum correlation value was calculated.

Thus, according to Embodiment 2, base station apparatus 300 is equipped with a radio reception section 210 that receives a frame in which, in a predetermined plurality of subcarriers, the frame synchronization sequence (SCH1 sequence) is mapped in the time domain aligned with the start of a frame starting TTI, and the TTI synchronization sequence (SCH2 sequence) is mapped in the time domain aligned with the start of a TTI other than the frame starting TTI; a synchronization channel correlation section 310 that extracts one TTI length of subcarrier signals in which the frame synchronization sequence and the TTI synchronization sequence are mapped from a received frame, performs the time domain multiplication of the extracted subcarrier signals by the relevant frame synchronization sequence and the TTI synchronization sequence, and calculates a correlation; and a TTI timing/frame timing detection section 320 that detects TTI timing based on the correlation value according to the TTI synchronization sequence, and detects frame timing based on the correlation value according to the frame synchronization sequence; and TTI timing/frame timing detection section 320 identifies the TTI timing and the frame timing based on the result of a comparison between the difference between the TTI synchronization sequence maximum correlation value and the frame synchronization sequence maximum correlation value, and a threshold value.

By this means, the criterion for identifying TTI timing and frame timing is made more stringent, enabling the accuracy of TTI timing identification and frame timing identification to be improved. As a result, the number of retries for cell search can be reduced and the speed of a cell search can be increased.

### (Embodiment 3)

A frame of Embodiment 1 is configured with an SCH1 sequence mapped in the time domain in the frame starting TTI, and an SCH2 sequence mapped in the time domain in other TTIs, in the same subcarrier. In contrast, a frame of Embodiment 3, while being the same as in Embodiment 1 with regard to time for TTIs in which an SCH1 sequence and SCH2 sequence are mapped, uses different subcarriers for the arrangement of an SCH1 sequence and SCH2 sequence. Also, the number of subcarriers in which an SCH1 sequence and SCH2 sequence are mapped is smaller than in Embodiment 1. The main configurations of a base station apparatus and mobile station apparatus according to Embodiment 3 are the same as the main configurations of base station apparatus 100 and mobile station apparatus 200 according to Embodiment 1, and therefore FIG.2 and FIG.4 will be used in describing this embodiment.

Frame configuration section 120 has a modulated signal from modulation section 110 as input, and also has SCH sequences from synchronization channel generation section 115 as input, and forms a frame by mapping the modulated signal and SCH sequences in predetermined symbols specified by subcarrier (that is, frequency) and time.

In Embodiment 3, frame configuration section 120 has two different kinds of sequence - that is, an SCH1 sequence and SCH2 sequence-as input from synchronization channel generation section 115, and inserts an SCH1 sequence and SCH2 sequence in two or more different predetermined subcarriers.

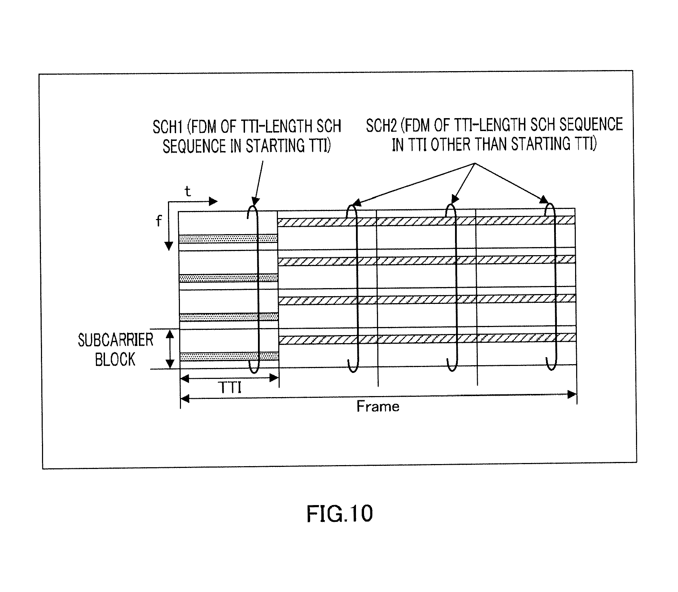

Specifically, as shown in FIG.10, in predetermined subcarriers, an SCH1 sequence is mapped in the time domain in the TTI at the start of a frame, and on predetermined subcarriers other than the subcarriers in which the SCH1 sequence is mapped, an SCH2 sequence is mapped in the time domain in a TTI other than the TTI at the start of the frame. In FIG.10, the number of subcarriers in which an SCH1 sequence and SCH2 sequence are mapped is half that in the case of the frame configuration of Embodiment 1. By this means, even though the number of subcarriers in which both sequences are mapped is half that in the case of the frame configuration of Embodiment 1, both sequences are mapped on frequencies in a well-balanced manner, and consequently resistance to frequency fading does not decrease. Also, if the number of subcarriers in which both sequences are mapped is made the same as in Embodiment 1, resistance to frequency fading can be further improved, and the probability of not being able to detect either an SCH1 sequence or SCH2 sequence decreases, enabling the probability of a cell search succeeding to be increased.

Synchronization channel correlation section 230 has a received signal that has undergone FFT processing as input from FFT processing section 225, extracts one TTI length of subcarrier signals in which an SCH is multiplexed, calculates the time domain correlation between these extracted signals and two SCH sequence replicas (an SCH1 sequence replica and SCH2 sequence replica) input from synchronization channel sequence replica generation section 235, and calculates a correlation value by performing in-phase addition. That is to say, synchronization channel correlation section 230 extracts one TTI length for subcarrier signals in which an SCH1 sequence is multiplexed, calculates the time domain correlation between these extracted signals and an SCH1 sequence replica, and calculates a correlation value by performing in-phase addition. Then synchronization channel correlation section 230 calculates a correlation value for an SCH2 sequence in the same way.

Furthermore, synchronization channel correlation section 230 performs correlation value power combining between subcarriers for each SCH1 sequence or for each SCH2 sequence, and outputs the correlation value power combining results for each symbol to TTI timing/frame timing detection section 240.

Thus, according to Embodiment 3, base station apparatus 100 is equipped with a frame configuration section 120 that forms a frame by mapping a frame synchronization sequence and a TTI synchronization sequence in different subcarriers, mapping the frame synchronization sequence in the time domain aligned with the start of a frame starting TTI, and mapping the TTI synchronization sequence in the time domain aligned with the start of a TTI other than the frame starting TTI, and a radio transmission section 145 that transmits the frame.

By this means, both sequences are mapped on frequencies in a well-balanced manner, enabling resistance to frequency fading to be improved. Also, explicitly separating the subcarriers in which the two sequences are mapped enables interference with a sequence used in another cell, for example, to be prevented.

Furthermore, according to Embodiment 3, mobile station apparatus 200 is equipped with a radio reception section 210 that receives a frame in which a frame synchronization sequence and a TTI synchronization sequence are mapped on different subcarriers, the frame synchronization sequence is mapped in the time domain aligned with the start of a frame starting TTI, and the TTI synchronization sequence is mapped in the time domain aligned with the start of a TTI other than the frame starting TTI; a synchronization channel correlation section 230 that extracts a TTI length of subcarrier signals in which the frame synchronization sequence is mapped and subcarrier signals in which the TTI synchronization sequence is mapped at the same symbol timing, performs the time domain multiplication of the mapped frame synchronization sequence or TTI synchronization sequence for the extracted subcarrier signals, and calculates a correlation; and a TTI timing/frame timing detection section 240 that detects TTI timing based on the TTI synchronization sequence correlation value, and detects frame timing based on the frame synchronization sequence correlation value.

By this means, a frame in which both sequences are mapped on frequencies in a well-balanced manner can be received, enabling resistance to frequency fading to be improved. Also, explicitly separating the subcarriers in which the two sequences are mapped enables interference with a sequence used in another cell, for example, to be prevented.

### (Embodiment 4)

A frame of Embodiment 1 is configured with an SCH1 sequence mapped in the time domain in the frame starting TTI, and an SCH2 sequence mapped in the time domain in other TTIs, in the same subcarrier. In contrast, a frame of Embodiment 4, while being the same as in Embodiment 1 in that an SCH1 sequence and SCH2 sequence are mapped so as not to mutually overlap with regard to TTIs in the same subcarrier, differs from Embodiment 1 in that one SCH1 sequence and SCH2 sequence are mapped divided among a plurality of subcarriers. Therefore, although the number of symbols necessary for mapping an SCH1 sequence and SCH2 sequence is the same as in Embodiment 1, the number of subcarriers used increases, making this frame configuration resistant to frequency selective fading. The main configurations of a base station apparatus and mobile station apparatus according to Embodiment 4 are the same as the main configurations of base station apparatus 100 and mobile station apparatus 200 according to Embodiment 1, and therefore FIG.2 and FIG.4 will be used in describing this embodiment.

Frame configuration section 120 has a modulated signal from modulation section 110 as input, and also hasSCHsequences from synchronization channel generation section 115 as input, and forms a frame by mapping the modulated signal and SCH sequences in predetermined symbols specified by subcarrier (that is, frequency) and time.

In Embodiment 4, frame configuration section 120 has two different kinds of sequence - that is, an SCH1 sequence and SCH2 sequence - as input from synchronization channel generation section 115, and inserts an SCH1 sequence and SCH2 sequence in predetermined subcarriers.

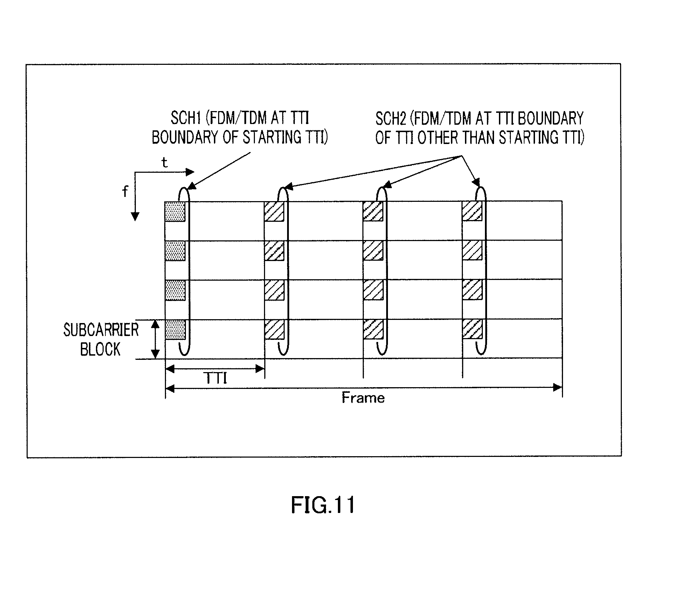

Specifically, as shown in FIG.11, a SCH1 sequence of one TTI length is divided into a plurality of SCH1 sequences, and these SCH1 divided sequences are mapped on the earliest symbol group time-wise of the frame starting TTI. Also, SCH2 divided sequences resulting from dividing a SCH2 sequence of one TTI length are mapped on the earliest symbol groups time-wise of TTIs other than the frame starting TTI in a plurality of adjacent subcarriers. As a result of using this kind of frame configuration, although the number of symbols necessary for mapping an SCH1 sequence and SCH2 sequence is the same as in Embodiment 1 and there is therefore no change in the number of symbols in a frame for sending transmit data, resistance to frequency selective fading can be improved due to the fact that one SCH1 sequence and SCH2 sequence are transmitted divided over a plurality of subcarriers.

Synchronization channel correlation section 230 has a received signal that has undergone FFT processing as input from FFT processing section 225, extracts one TTI length of subcarrier signals in which an SCH is multiplexed, calculates the time domain correlation between these extracted signals and the corresponding SCH1 divided sequences and SCH2 divided sequences, and calculates a correlation value by performing in-phase addition. That is to say, synchronization channel correlation section 230 extracts one TTI length for subcarrier signals in which an SCH1 sequence is multiplexed, calculates the time domain correlation between these extracted signals and SCH1 divided sequence replicas corresponding to those subcarrier signals, and calculates a correlation value by performing in-phase addition. Then synchronization channel correlation section 230 calculates a correlation value for an SCH2 sequence in the same way.

Furthermore, synchronization channel correlation section 230 performs correlation value power combining between subcarriers for each SCH1 sequence or for each SCH2 sequence, and outputs the correlation value power combining results for each symbol to TTI timing/frame timing detection section 240.

Thus, according to Embodiment 4, base station apparatus 100 is equipped with a frame configuration section 120 that forms a frame by mapping frame synchronization divided sequences resulting from dividing a frame synchronization sequence (SCH1 sequence) into a predetermined number in the time domain aligned with the start of a frame in a plurality of adjacent subcarriers, and mapping TTI synchronization divided sequences resulting from dividing a TTI synchronization sequence (SCH2 sequence) into a predetermined number in the time domain aligned with the start of a TTI other than the frame starting TTI in a plurality of adjacent subcarriers, and a radio transmission section 145 that transmits the frame.

By this means, the number of subcarriers in which both sequences are multiplexed can be increased by mapping divided sequences resulting from dividing both sequences dispersed over a plurality of subcarriers, enabling resistance to frequency fading to be improved.

Furthermore, according to Embodiment 4, mobile station apparatus 200 is equipped with a radio reception section 210 that receives a frame in which frame synchronization divided sequences resulting from dividing a frame synchronization sequence into a predetermined number are mapped in the time domain aligned with the start of a frame in a plurality of adjacent subcarriers, and TTI synchronization divided sequences resulting from dividing a TTI synchronization sequence into a predetermined number in the time domain are mapped aligned with the start of a TTI other than the frame starting TTI in a plurality of adjacent subcarriers; a synchronization channel correlation section 230 that extracts a TTI length of subcarrier signals in which the frame synchronization sequence is mapped and subcarrier signals in which the TTI synchronization sequence is mapped from a received frame, performs the time domain multiplication of the frame synchronization divided sequences and TTI synchronization divided sequences for the extracted subcarrier signals, and calculates a correlation; and a TTI timing/frame timing detection section 240 that detects TTI timing based on the TTI synchronization divided sequence correlation value, and detects frame timing based on the frame synchronization divided sequence correlation value.

By this means, a frame can be received in which the number of subcarriers in which both sequences are multiplexed has been increased by mapping divided sequences resulting from dividing both sequences dispersed over a plurality of subcarriers, enabling resistance to frequency fading to be improved.

### (Embodiment 5)

A frame of Embodiment 1 is configured with an SCH1 sequence mapped in the time domain in the frame starting TTI, and an SCH2 sequence mapped in the time domain in other TTIs, in the same subcarrier. In contrast, in a frame of Embodiment 5, an SCH1 sequence is mapped in the time domain in the frame starting TTI of predetermined subcarriers, and an SCH2 sequence is mapped in the time domain in all TTIs including the frame starting TTI in predetermined subcarriers in which this SCH1 sequence is not mapped. The number of subcarriers in which SCH1 sequence and SCH2 sequence are mapped is smaller than in Embodiment 1.

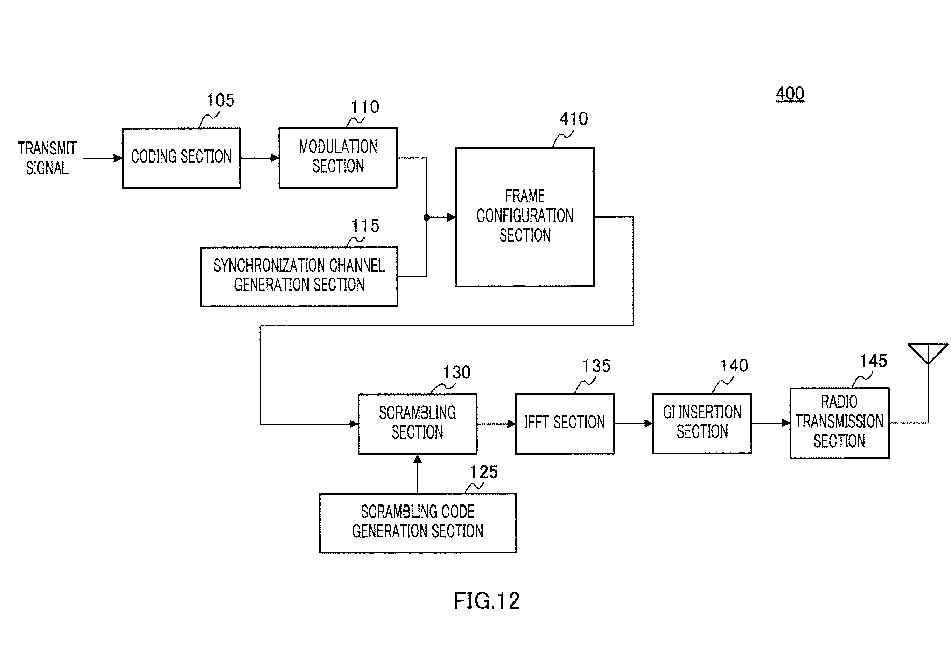

As shown in FIG.12, a base station apparatus 400 of Embodiment 5 has a frame configuration section 410.

This frame configuration section 410 has modulated signals from modulation section 110 as input, and also has SCH sequences from synchronization channel generation section 115 as input, and forms a frame by mapping the modulated signal and SCH sequences in predetermined symbols specified by subcarrier (that is, frequency) and time.

In Embodiment 5, frame configuration section 410 has two different kinds of sequence - that is, an SCH1 sequence and SCH2 sequence- as input from synchronization channel generation section 115, and inserts the SCH sequences (SCH1 sequence and SCH2 sequence) in mutually different subcarriers.

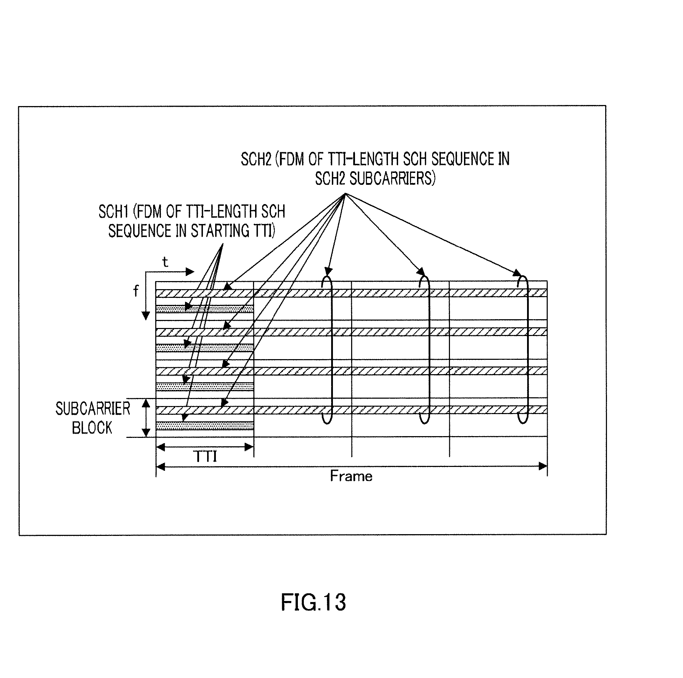

Specifically, as shown in FIG.13, frame configuration section 410 maps an SCH1 sequence in the time domain in the frame starting TTI of predetermined subcarriers, and maps an SCH2 sequence in the time domain in all TTIs including the frame starting TTI in predetermined subcarriers in which this SCH1 sequence is not mapped. The length of both an SCH1 sequence and an SCH2 sequence is the TTI length.

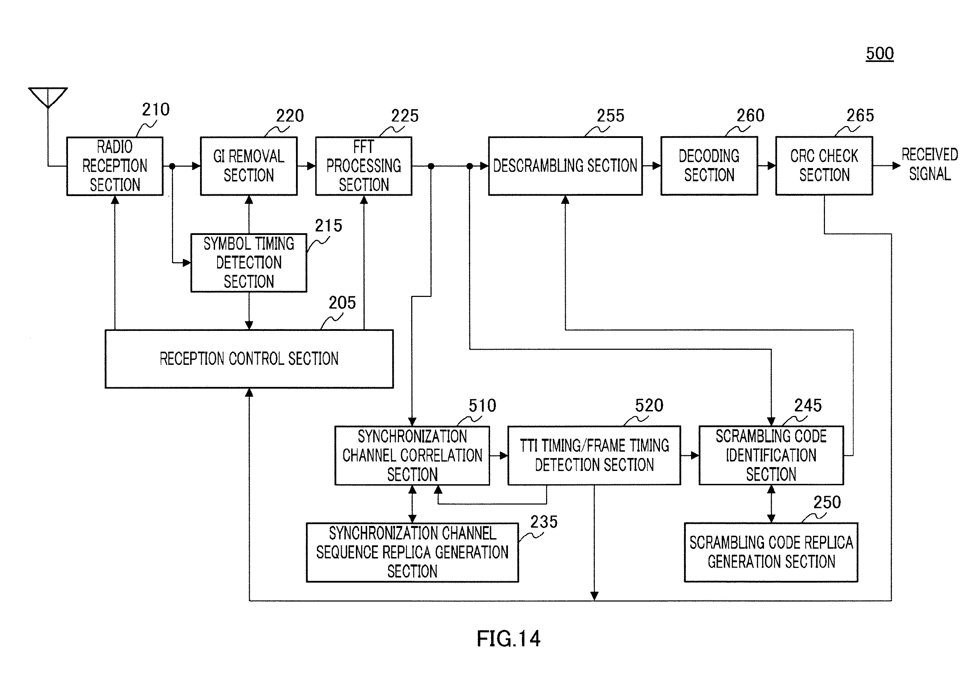

As shown in FIG.14, a mobile station apparatus 500 of Embodiment 5 has a synchronization channel correlation section 510 and a TTI timing/frame timing detection section 520.

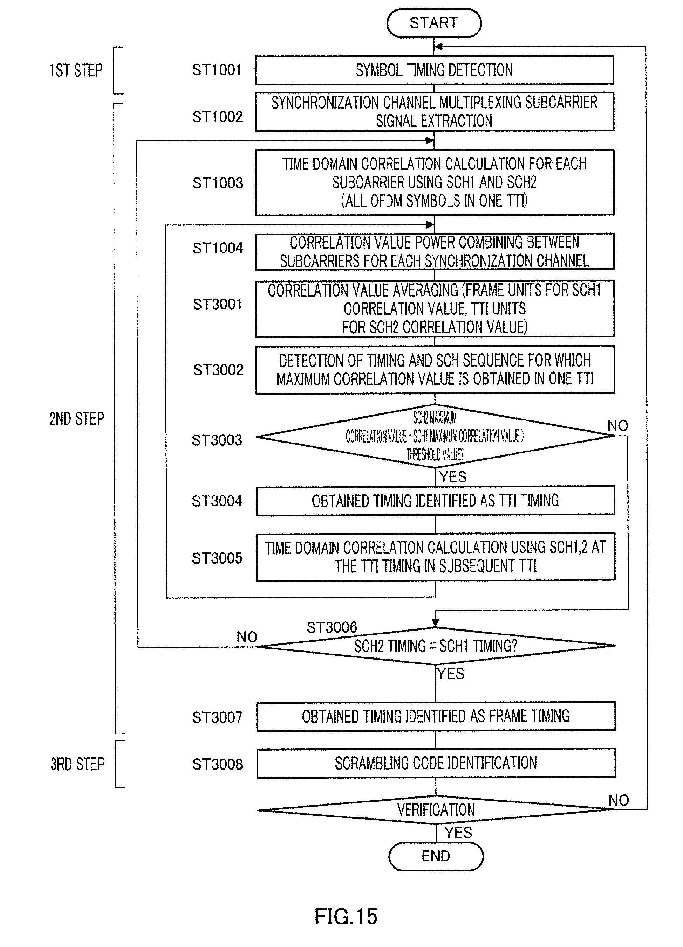

In explaining the operation of mobile station apparatus 500 having such a configuration with reference to FIG.15, synchronization channel correlation section 510 performs the same kind of operation as synchronization channel correlation section 230 of Embodiment 1 in steps ST1002 through ST1004.

First, since there are no correlation values to be averaged in the first step, step ST3001 is skipped, and, in step ST3002, TTI timing/frame timing detection section 520 has correlation values (after power combining) according to an SCH1 sequence and SCH2 sequence for each symbol timing in one TTI as input from synchronization channel correlation section 510, and detects the timing at which the maximum correlation value among the input correlation values is calculated, and the SCH sequence type (that is, whether the SCH sequence is an SCH1 sequence or SCH2 sequence).

In step ST3003, TTI timing/frame timing detection section 520 performs a comparison between the difference between the SCH2 sequence maximum correlation value and the SCH1 sequence maximum correlation value detected in step ST3002, and a threshold value, and performs processing according to the result of this comparison.

Specifically, if the result of this comparison is that the difference between the SCH2 sequence maximum correlation value and the SCH1 sequence maximum correlation value is greater than the threshold value (step ST3003: YES), TTI timing/frame timing detection section 520 identifies the timing at which the SCH2 sequence maximum correlation value was calculated as TTI timing (step ST3004). Then TTI timing/frame timing detection section 520 outputs TTI timing information to synchronization channel correlation section 510.

In step ST3005, on receiving TTI timing information from TTI timing/frame timing detection section 520, synchronization channel correlation section 510 calculates correlation between an SCH1 sequence replica, SCH2 sequence replica, and extracted signal only for symbol timing that is detected as TTI timing, and therefore calculates correlation between an SCH1 sequence replica, SCH2 sequence replica, and extracted signal at the next TTI timing. Then synchronization channel correlation section 510 performs correlation value power combining of the correlation values calculated for each predetermined subcarrier in step ST3005 between subcarriers for each SCH1 sequence or each SCH2 sequence. TTI timing/frame timing detection section 520 then compares the power-combined correlation value for the SCH2 sequence with the power-combined correlation value for the SCH1 sequence, and performs processing according to the result of this comparison. If the result of the comparison is that the difference between the power-combined correlation value for the SCH2 sequence and the power-combined correlation value for the SCH1 sequence is greater than the threshold value, the processing flow proceeds to step ST3004 again.

If the result of the comparison is that the difference between the power-combined correlation value for the SCH2 sequence and the power-combined correlation value for the SCH1 sequence is less than or equal to the threshold value (step ST3003: NO), TTI timing/frame timing detection section 520 compares the timing at which the SCH2 sequence maximum correlation value is calculated with the timing at which the SCH1 sequence maximum correlation value is calculated (step ST3006).

If the result of the comparison is that the timing at which the SCH2 sequence maximum correlation value is calculated and the timing at which the SCH1 sequence maximum correlation value is calculated coincide (step ST3006: YES), TTI timing/frame timing detection section 520 identifies that timing as frame timing (step ST3007) .

If the result of the comparison is that the timing at which the SCH2 sequence maximum correlation value is calculated and the timing at which the SCH1 sequence maximum correlation value is calculated do not coincide (step ST3006: NO), TTI timing/frame timing detection section 520 goes to step ST1003.

In step ST3008, scrambling code identification section 245 extracts a CPICH from the received signal in accordance with input frame timing information, forms CPICH replicas using all scrambling code replica candidates and the known pilot signal, calculates the correlation between the extracted CPICH and generated CPICH replicas, and identifies the scrambling code used when the CPICH replica for which the maximum correlation value is calculated is formed. Then descrambling is performed using the identified scrambling code, error correction decoding and a CRC check are performed, and verification is performed according to the CRC check result.

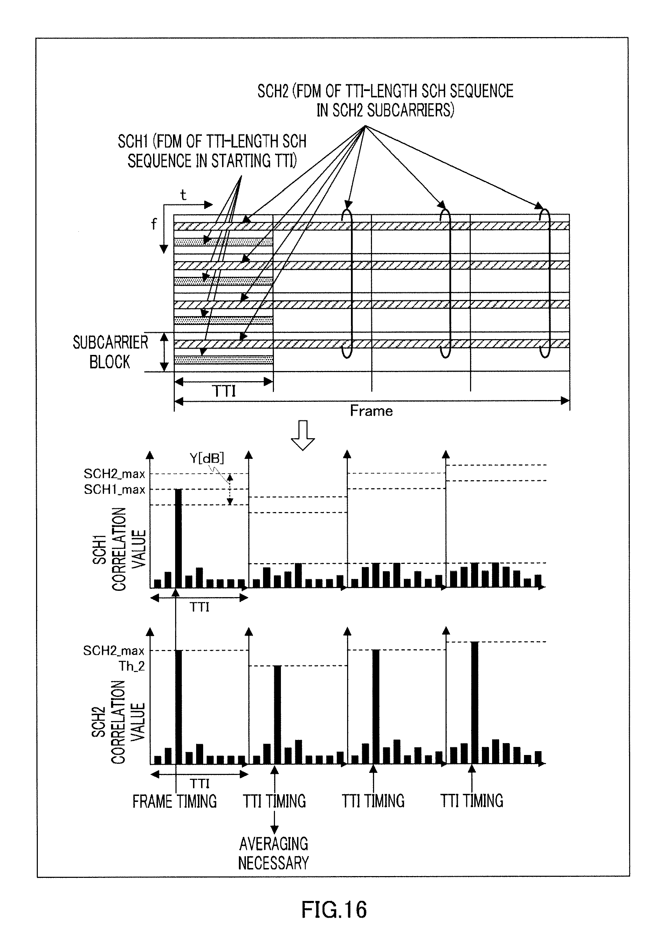

Above-described TTI timing and frame timing identification will now be explained visually with reference to FIG.16. In this figure, the upper diagram shows a frame of Embodiment 5, and the lower diagrams show SCH1 correlation value and SCH2 correlation value calculation when synchronization channel correlation section 510 extracts subcarrier signals of one TTI length at four timings. In FIG.16, one TTI is assumed to be composed of 8 symbols.

When, for example, the synchronization channel correlation section extracts subcarrier signals of one TTI length at the timing shown at the leftmost side of the lower diagrams in FIG.16 - that is, TTI period extending from the previous frame to the present frame- frame timing is present within that TTI period. Since a frame of Embodiment 5 is configured with an SCH1 sequence and SCH2 sequence mapped on different subcarriers in the TTI at the start of the frame, large peaks that are not very different in size appear in both the SCH1 correlation value and SCH2 correlation value at frame timing.
Therefore, when the difference between the maximum value among the SCH1 correlation values and the maximum value among the SCH2 correlation values is less than or equal to a predetermined threshold value - that is, when there is not much difference between the two maximum values - this timing is taken as a frame timing candidate. Then, since timings at which the maximum value among the SCH1 correlation values and the maximum value among the SCH2 correlation values appear should coincide at frame timing, when timings at which both maximum values appear coincide, that timing is identified as frame timing. At the timing shown at the leftmost side of the lower diagrams in FIG.16, there is not much difference between the two maximum values, and timings at which both maximum values appear coincide, and therefore this timing is identified as frame timing.

Also, when, for example, the synchronization channel correlation section extracts subcarrier signals of one TTI length shown as the second from the left in the lower diagrams in FIG. 16-that is, TTI period extending from the TTI at the start of a frame to the next TTI - TTI timing is present, but frame timing is not present, within that TTI period. Since a frame of Embodiment 5 is configured as described above, the SCH2 correlation value is largest at TTI timing, and a large peak does not appear in the SCH1 correlation value at this TTI timing. Therefore, for the subcarrier signals of one TTI length extracted by the synchronization channel correlation section, when the maximum correlation value appears in the SCH2 correlation value and a large peak does not appear in the SCH1 correlation value, the symbol timing at which the maximum correlation value among the SCH2 correlation values appears can be identified as being TTI timing (however, this TTI timing is not frame timing).

Thus, according to Embodiment 5, base station apparatus 400 is equipped with a frame configuration section 410 that forms a frame by mapping a frame synchronization sequence (SCH1 sequence) in the time domain aligned with the start of a frame in predetermined subcarriers, and mapping a TTI synchronization sequence (SCH2 sequence) aligned with the start of all TTIs in subcarriers other than the predetermined subcarriers in which the frame synchronization sequence is mapped, and a radio transmission section 145 that transmits the frame.

By this means, a frame synchronization sequence and TTI synchronization sequence are transmitted multiplexed time-wise in a frame starting TTI, enabling frame timing success or failure to be determined on the frame receiving side by determining whether or not detection results for frame timing and TTI timing corresponding to that timings coincide timing-wise. As a result, the accuracy of frame timing determination can be improved.

Furthermore, according to Embodiment 5, mobile station apparatus 500 is equipped with a radio reception section 210 that receives a frame in which a frame synchronization sequence (SCH1 sequence) is mapped in the time domain aligned with the start of a frame in predetermined subcarriers, and a TTI synchronization sequence (SCH2 sequence) is mapped aligned with the start of all TTIs in subcarriers other than the predetermined subcarriers in which the frame synchronization sequence is mapped; a synchronization channel correlation section 510 that extracts a TTI length of subcarrier signals in which the frame synchronization sequence and TTI synchronization sequence are mapped from a received frame, performs the time domain multiplication of the relevant frame synchronization sequence and the TTI synchronization sequence by the extracted subcarrier signals, and calculates a correlation; and a TTI timing/frame timing detection section 520 that detects TTI timing based on the TTI synchronization sequence correlation value, and detects frame timing based on the frame synchronization sequence correlation value.

When the detected frame timing and the detected TTI timing coincide, TTI timing/frame timing detection section 520 identifies the detected frame timing as frame timing.

By this means, a frame synchronization sequence and TTI synchronization sequence are transmitted multiplexed time-wise in a frame starting TTI, enabling frame timing success or failure to be determined by determining whether or not detection results for frame timing and TTI timing coincide timing-wise. As a result, the accuracy of frame timing determination can be improved.

Also, TTI timing/frame timing detection section 520 identifies the TTI timing and frame timing according to the amount of difference between the TTI synchronization sequence maximum correlation value and the frame synchronization sequence maximum correlation value.

By this means, the criterion for identifying TTI timing and frame timing is made more stringent, enabling the accuracy of TTI timing identification and frame timing identification to be improved. As a result, the number of retries for cell search can be reduced and the speed of a cell search can be increased.

### (Embodiment 6)

In a frame of Embodiment 6, an SCH2 sequence is mapped in the time domain in all TTIs in predetermined subcarriers, and an SCH2 sequence is mapped in the time domain in only the frame starting TTI in predetermined subcarriers other than these subcarriers. That is to say, the frame configuration of Embodiment 6 is the frame configuration of Embodiment 5 with the SCH1 sequence changed to an SCH2 sequence.

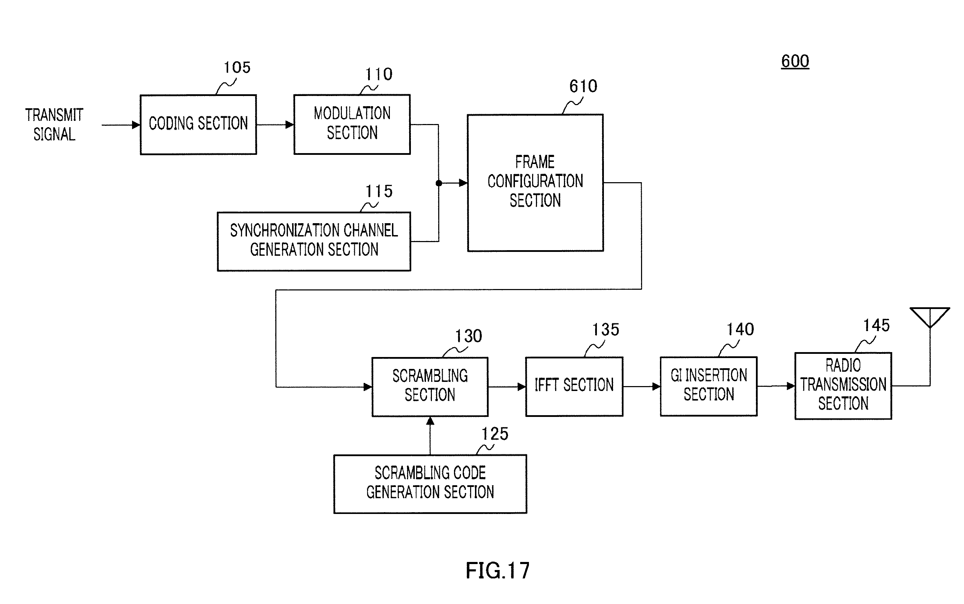

As shown in FIG.17, a base station apparatus 600 of Embodiment 6 has a frame configuration section 610.

This frame configuration section 610 has a modulated signal from modulation section 110 as input, and also has SCH sequences from synchronization channel generation section 115 as input, and forms a frame by mapping the modulated signal and SCH sequences in predetermined symbols specified by subcarrier (that is, frequency) and time.

In Embodiment 6, frame configuration section 610 inserts an SCH2 sequence received from synchronization channel generation section 115 in predetermined subcarriers.

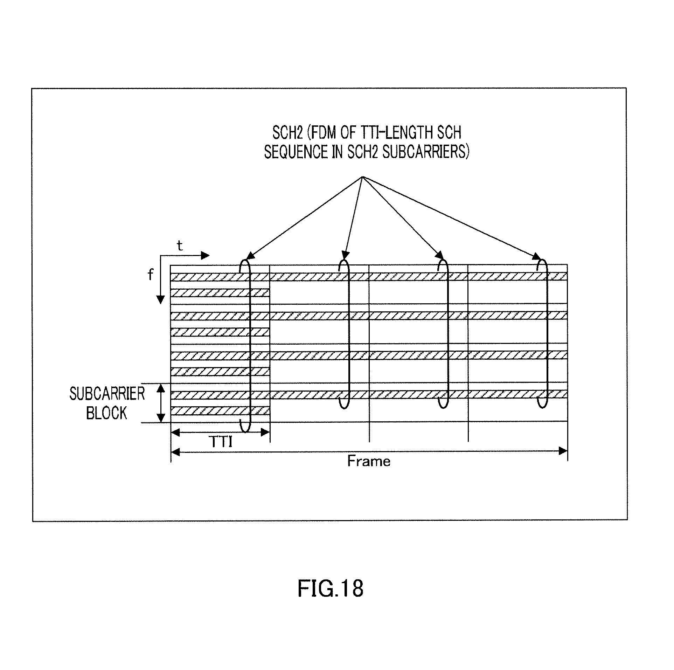

Specifically, as shown in FIG.18, frame configuration section 610 maps an SCH2 sequence in the time domain in all TTIs in predetermined subcarriers, and maps an SCH2 sequence in the time domain in only the frame starting TTI in predetermined subcarriers other than these subcarriers.

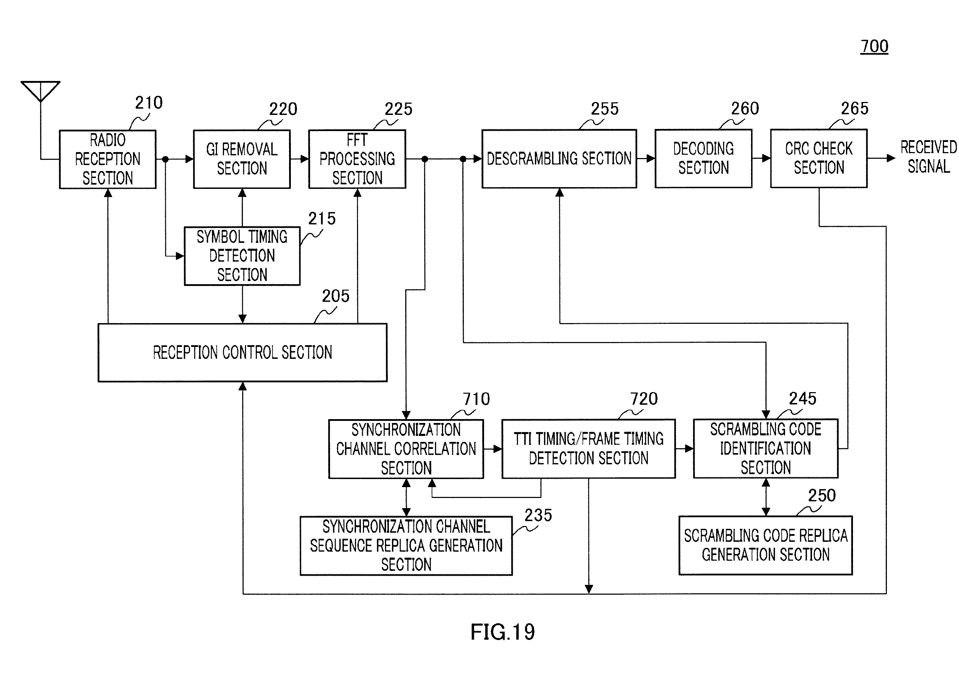

As shown in FIG.19, a mobile station apparatus 700 of Embodiment 6 has a synchronization channel correlation section 710 and a TTI timing/frame timing detection section 720.

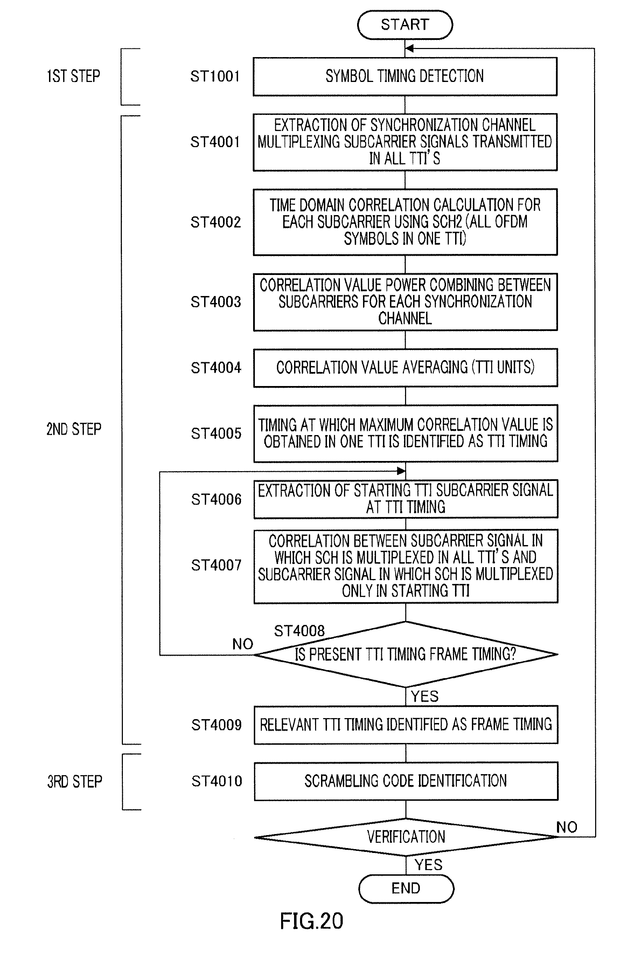

In explaining the operation of mobile station apparatus 700 having such a configuration with reference to FIG.20, in step ST4001 synchronization channel correlation section 710 extracts one TTI length of subcarrier signals in which an SCH2 sequence is mapped over all TTIs.

In step ST4002, synchronization channel correlation section 710 calculates the time domain correlation between the extracted signals and an SCH2 sequence replica over all symbols.

In step ST4003, synchronization channel correlation section 710 performs power combining between subcarriers of the correlation values calculated in step ST4002.

In step ST4004, synchronization channel correlation section 710 performs averaging in TTI units of the correlation values calculated in step ST4003 for each time-wise relative position for SCH2 sequence replica extracted signals.

In step ST4005, TTI timing/frame timing detection section 720 identifies the timing at which the maximum correlation value is calculated among the averaged correlation values in step ST4004 as TTI timing. Then TTI timing/frame timing detection section 720 outputs TTI timing information to synchronization channel correlation section 710.

In step ST4006, on receiving TTI timing information from TTI timing/frame timing detection section 720, synchronization channel correlation section 710 calculates correlation between an SCH2 sequence replica and extracted signal only for symbol timing that is TTI timing, and therefore calculates correlation between an SCH2 sequence replica and extracted signal at the next TTI timing.

In step ST4007, synchronization channel correlation section 710 calculates correlation between an extracted signal and SCH2 sequence replica at the next TTI timing for subcarriers in which an SCH2 sequence is mapped over all TTIs.

In step ST4008, TTI timing/frame timing detection section 720 determines whether or not the present TTI timing is frame timing using the correlation value computed in step ST4007. Specifically, since a frame of Embodiment 6 has subcarriers in which an SCH2 sequence is mapped only in the TTI at the start of that frame, whether or not the present TTI timing is frame timing can be determined by calculating the correlation between these subcarrier signals and subcarrier signals in which an SCH2 sequence is mapped over all TTIs in accordance with the TTI timing. Specifically, if the correlation between subcarriers in which an SCH2 sequence is mapped only in the starting TTI and subcarrier signals in which an SCH2 sequence is mapped over all TTIs is of a certain magnitude, the present TTI timing identification is determined to be frame timing, and if that correlation is less than a certain magnitude, the present TTI timing identification is determined not to be frame timing.

If, as a result of the determination, the present TTI timing is determined to be frame timing (step ST4008: YES), TTI timing/frame timing detection section 720 identifies this TTI timing as frame timing (step ST4009).

If, as a result of the determination, the present TTI timing is determined not to be frame timing (step ST4008: NO), the processing flow returns to step ST4006, and subcarrier signal extraction is performed at the next TTI timing.

In step ST4010, scrambling code identification section 245 extracts a CPICH from the received signal in accordance with input frame timing information, forms CPICH replicas using all scrambling code replica candidates and the known pilot signal, calculates the correlation between the extracted CPICH and generated CPICH replicas, and identifies the scrambling code used when the CPICH replica for which the maximum correlation value is calculated is formed.

Thus, according to Embodiment 6, base station apparatus 600 is equipped with a frame configuration section 610 that forms a frame in which a frame synchronization sequence is mapped in the time domain aligned with the start of a frame in predetermined subcarriers, and a TTI synchronization sequence is mapped aligned with the start of all TTIs in subcarriers other than the predetermined subcarriers in which the frame synchronization sequence is mapped, and the frame synchronization sequence and the TTI synchronization sequence comprise an identical sequence (for example, an SCH2 sequence); and a radio transmission section 145 that transmits the frame.

By this means, after TTI timing is detected on the frame receiving side using subcarrier signals in which a TTI synchronization sequence is mapped over all TTIs, this TTI timing can be determined to be TTI timing that is frame timing or TTI timing that is not frame timing simply by calculating the correlation between subcarrier signals in which a TTI synchronization sequence is mapped and subcarrier signals in which a frame synchronization sequence is mapped in accordance with this TTI timing. Also, since propagation path effects can be cancelled by calculating the correlation of different subcarrier signals at the same timing, the accuracy of the above-described determination result is high.

### (Embodiment 7)

In a frame of Embodiment 7, an SCH1 sequence for frame synchronization is mapped in the time domain over all TTIs in predetermined subcarriers, and an SCH2 sequence for TTI synchronization is mapped in the time domain in predetermined subcarriers other than the subcarriers in which that SCH1 sequence is mapped. However, an SCH1 sequence has a length of one frame, while an SCH2 sequence has a length of one TTI.

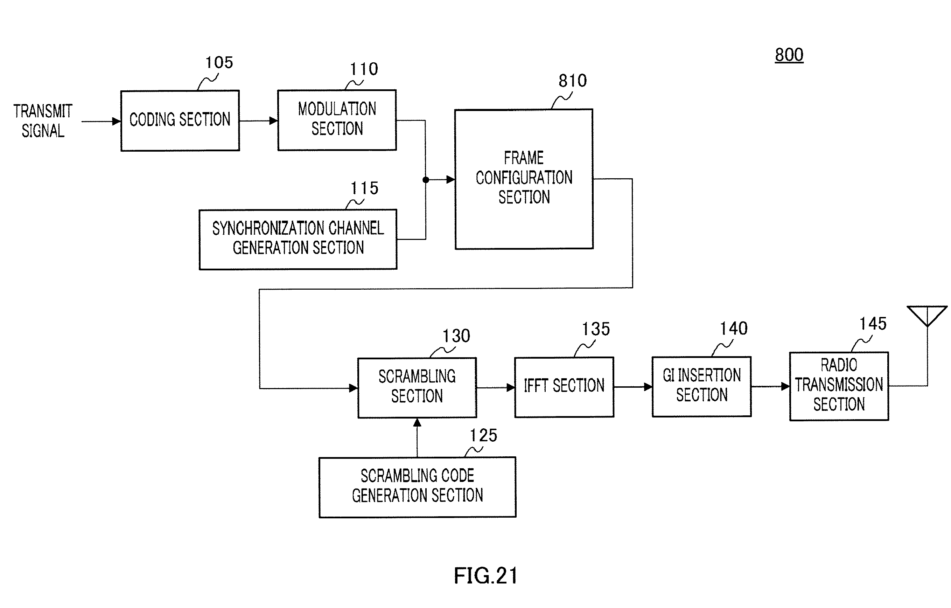

As shown in FIG.21, a base station apparatus 800 of Embodiment 7 has a frame configuration section 810. This frame configuration section 810 has a modulated signal from modulation section 110 as input, and also has SCH sequences from synchronization channel generation section 115 as input, and forms a frame by mapping the modulated signal and SCH sequences in predetermined symbols specified by subcarrier (that is, frequency) and time.

In Embodiment 7, frame configuration section 810 has two different kinds of sequence - that is, an SCH1 sequence and SCH2 sequence- as input from synchronization channel generation section 115, and inserts an SCH1 sequence and SCH2 sequence in two or more different predetermined subcarriers.

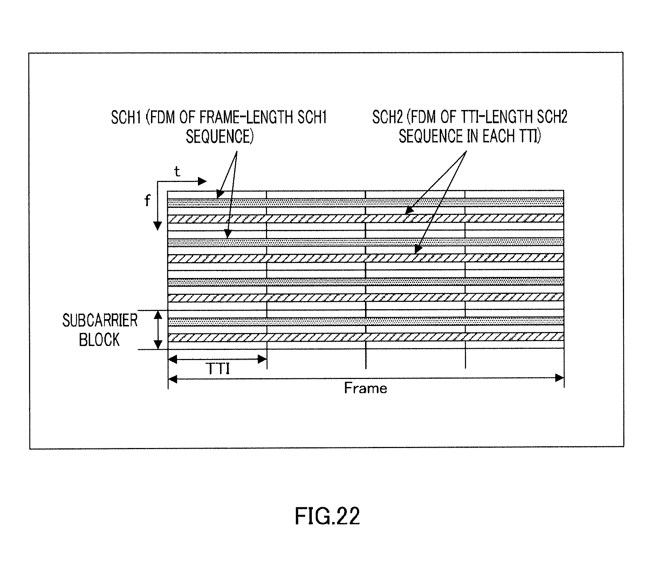

Specifically, as shown in FIG.22, in predetermined subcarriers, an SCH1 sequence for frame synchronization is mapped in the time domain over all TTIs, and in predetermined subcarriers other than the subcarriers in which this SCH1 sequence is mapped, an SCH2 sequence is mapped in the time domain over all TTIs. However, an SCH1 sequence is one frame in length and is therefore mapped in frame cycles, while an SCH2 sequence is one TTI in length and is therefore mapped in TTI cycles.

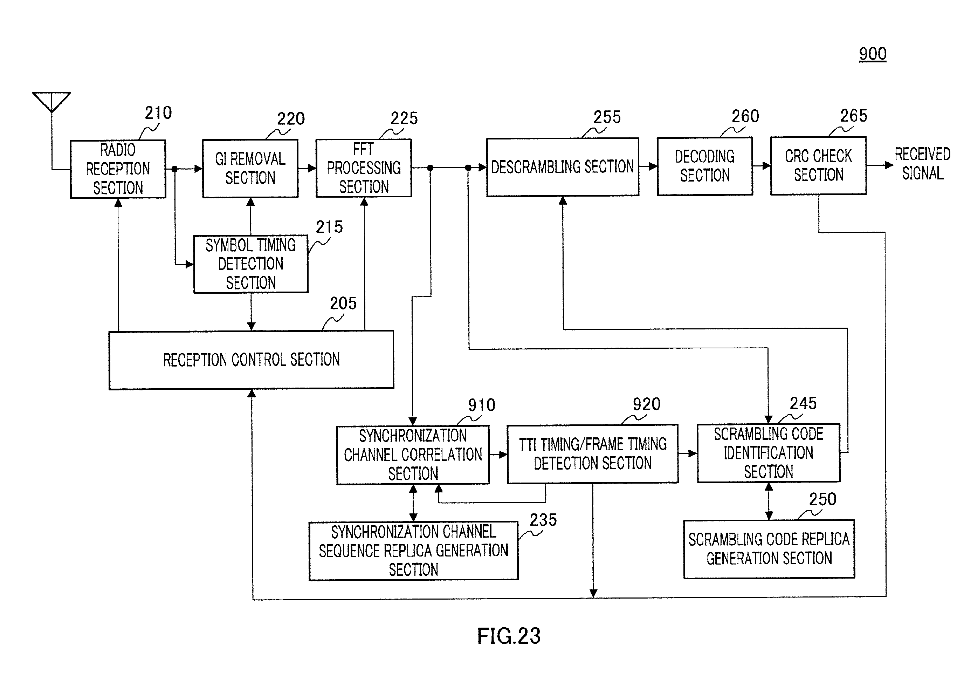

As shown in FIG.23, a mobile station apparatus 900 of Embodiment 7 has a synchronization channel correlation section 910 and a TTI timing/frame timing detection section 920.

Synchronization channel correlation section 910 has a received signal that has undergone FFT processing as input from FFT processing section 225, extracts subcarrier signals in which an SCH is multiplexed, calculates the time domain correlation between these extracted signals and two SCH sequence replicas (an SCH1 sequence replica and SCH2 sequence replica), and calculates a correlation value by performing in-phase addition. Specifically, synchronization channel correlation section 910 extracts one frame length of subcarrier signals in which an SCH1 sequence is multiplexed, calculates the time domain correlation between these extracted signals and a one-frame-length SCH1 sequence replica, and calculates a correlation value by performing in-phase addition. In parallel with this, synchronization channel correlation section 910 extracts one TTI length of subcarrier signals in which an SCH2 sequence is multiplexed, calculates the time domain correlation between these extracted signals and a one-TTI-length SCH2 sequence replica, and calculates a correlation value by performing in-phase addition. Furthermore, synchronization channel correlation section 910 performs correlation value power combining between subcarriers for each SCH1 sequence or for each SCH2 sequence, and outputs the correlation value power combining results for each symbol to TTI timing/frame timing detection section 920.

TTI timing/frame timing detection section 920 has correlation values (after power combining) according to the SCH1 sequence for each symbol timing in one frame as input from synchronization channel correlation section 910, and detects the timing at which the maximum correlation value among the input correlation values is calculated. Also, TTI timing/frame timing detection section 920 has correlation values (after power combining) according to the SCH2 sequence for each symbol timing in one TTI as input from synchronization channel correlation section 910, and detects the timing at which the maximum correlation value among the input correlation values is calculated. Then the two detected timings are identified as frame timing and TTI timing. Since frame timing is also TTI timing, it is possible to determine whether or not the frame timing and TTI timing coincide, and use the determination result as verification. That is to say, when the frame timing and TTI timing coincide, this can be taken as terminating the second step of an initial cell search, whereas when the frame timing and TTI timing do not coincide, the second step of the initial cell search can be determined to have failed and a retry can be performed from the start of the first step or second step, or averaging can be performed including correlation values calculated from subcarrier signals in the next frame or TTI by synchronization channel correlation section 910.

In the above description, a case in which frame timing and TTI timing are detected in parallel has been described, but this is not a limitation, and phased detection may also be performed in which TTI timings are detected first, after which frame timing is detected from among those TTI timings.

Thus, according to Embodiment 7, base station apparatus 800 is equipped with a frame configuration section 810 that forms a frame by mapping a frame-length frame synchronization sequence (SCH1 sequence) in the time domain in predetermined subcarriers, and mapping a TTI-length TTI synchronization sequence (SCH2 sequence) in the time domain in subcarriers other than the predetermined subcarriers in which that frame synchronization sequence is mapped, and a radio transmission section 145 that transmits the frame.

By this means, TTI timing detection and frame timing detection can be performed simultaneously and independently on the receiving side, enabling identification of both timings to be performed at high speed. Also, since a frame synchronization sequence is long, the accuracy of frame timing detection can be improved.

Furthermore, according to Embodiment 7, mobile station apparatus 900 is equipped with a radio reception section 210 that receives a frame in which a frame-length frame synchronization sequence (SCH1 sequence) is mapped in the time domain in predetermined subcarriers, and a TTI-length TTI synchronization sequence (SCH2 sequence) is mapped in the time domain in subcarriers other than the predetermined subcarriers in which that frame synchronization sequence is mapped; a synchronization channel correlation section 910 that, from a received frame, extracts a frame length of subcarrier signals in which the frame synchronization sequence is mapped, and performs the time domain multiplication of the relevant frame synchronization sequence by the extracted subcarrier signals and calculates a correlation, and also extracts a TTI length of subcarrier signals in which the TTI synchronization sequence is mapped, and performs the time domain multiplication of the relevant TTI synchronization sequence by the extracted subcarrier signals and calculates a correlation; and a TTI timing/frame timing detection section 920 that detects TTI timing based on the TTI synchronization sequence correlation value, and detects frame timing based on the frame synchronization sequence correlation value.

By this means, TTI timing detection and frame timing detection can be performed simultaneously and independently, enabling identification of both timings to be performed at high speed. Also, since a frame synchronization sequence is long, the accuracy of frame timing detection can be improved.

Also, on detecting TTI timing that is not frame timing, TTI timing/frame timing detection section 920 outputs TTI timing information to synchronization channel correlation section 910, and synchronization channel correlation section 910 calculates correlation only at the TTI timing in accordance with the TTI timing information.

By this means, it is sufficient to confirmwhether or not the timing is frame timing only for TTI timing after TTI timing is detected, enabling the amount of processing of synchronization channel correlation section 910 to be reduced, and also enabling the time until frame timing is detected to be shortened and the speed of a cell search to be increased.

Moreover, when the detected frame timing and the detected TTI timing coincide, TTI timing/frame timing detection section 920 identifies the detected frame timing as frame timing.

Bythismeans, the criterion for identifying frame timing is made more stringent, enabling the accuracy of frame timing identification to be improved. As a result, the number of cell search retries can be reduced and the speed of a cell search can be increased.

### (Embodiment 8)

A frame of Embodiment 1 through Embodiment 7 is configured with SCH sequences mapped in the time domain. In contrast, a frame of Embodiment 8 is configured with SCH sequences mapped in the frequency domain. Also, an SCH sequence is time-multiplexed in the TTI starting symbol commonly for all TTIs. Furthermore, an SCH sequence is time-multiplexed in the TTI ending symbol in a frame starting TTI, and an SCH sequence is time-multiplexed in the TTI starting symbol and a symbol other than the TTI ending symbol in a TTI other than a frame starting TTI. Thus, a starting TTI and a TTI other than a starting TTI are differentiated by the position of an SCH sequence mapped on a symbol other than a TTI starting symbol.

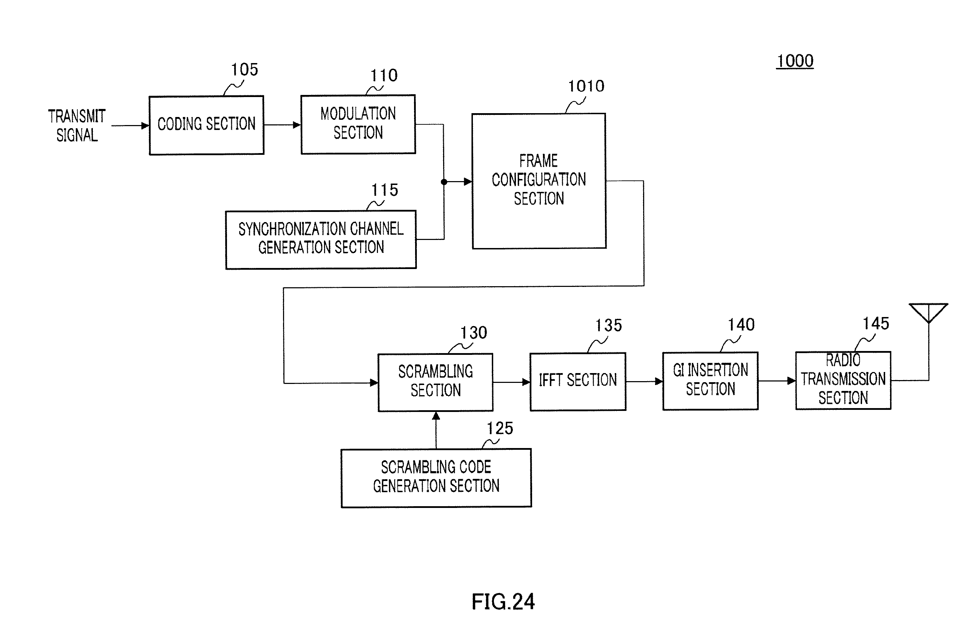

As shown in FIG.24, a base station apparatus 1000 of Embodiment 8 has a frame configuration section 1010. This frame configuration section 1010 has a modulated signal from modulation section 110 as input, and also has SCH sequences from synchronization channel generation section 115 as input, and forms a frame by mapping the modulated signal and SCH sequences in predetermined symbols specified by subcarrier (that is, frequency) and time.

In Embodiment 8, frame configuration section 1010 has an SCH2 sequence as input from synchronization channel generation section 115, and inserts the SCH sequence in a frame, changing the symbol position at which the SCH sequence is mapped in the frequency domain so that differentiation is provided between a frame starting TTI and other TTIs.

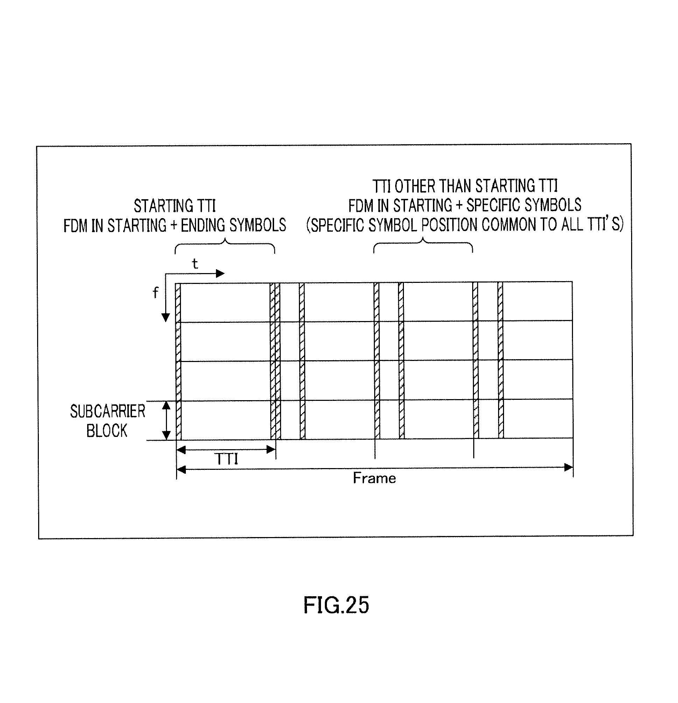

Specifically, as shown in FIG.25, in a frame starting TTI, frame configuration section 1010 maps an SCH2 sequence in the frequency domain in the TTI starting and ending symbols, and in a TTI other than a frame starting TTI, frame configuration section 1010 maps an SCH2 sequence in the frequency domain in the TTI starting symbol and a predetermined symbol (denoted by "specific symbol" in FIG.25) other than the TTI starting or ending symbol.

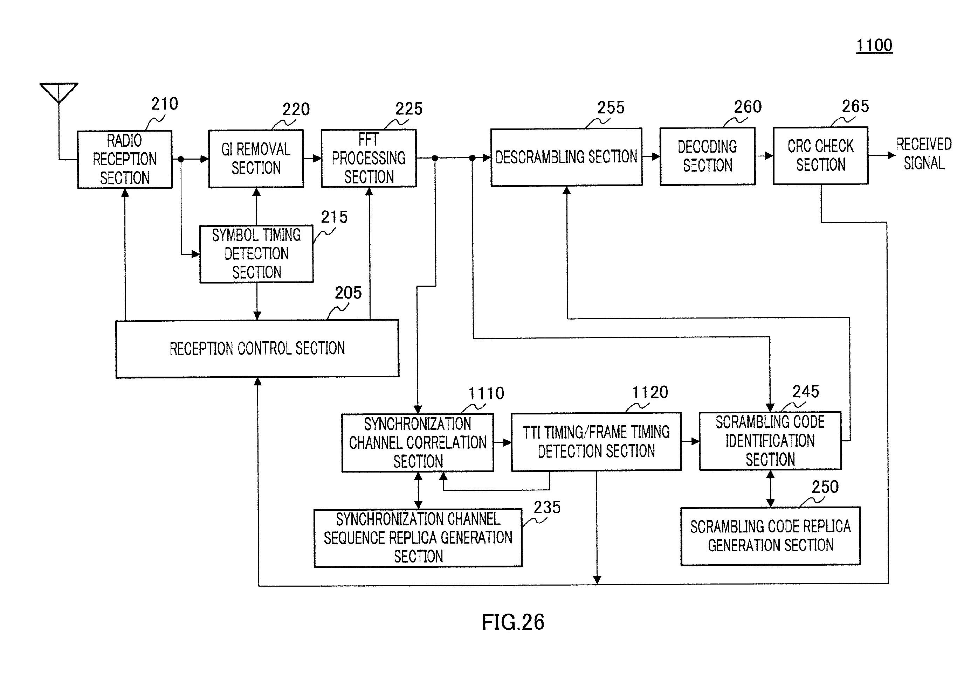

As shown in FIG.26, a mobile station apparatus 1100 of Embodiment 8 has a synchronization channel correlation section 1110 and a TTI timing/frame timing detection section 1120.

To explain the operation of mobile station apparatus 1100 having such a configuration, synchronization channel correlation section 1110 has a received signal that has undergone FFT processing as input from FFT processing section 225, extracts OFDM symbols at TTI intervals, and calculates the frequency domain correlation between an extracted signal and an SCH2 sequence replica. Then synchronization channel correlation section 1110 performs power averaging between TTIs of correlation values for OFDM symbols having the same symbol position in each TTI, and outputs a power average value to TTI timing/frame timing detection section 1120.

TTI timing/frame timing detection section 1120 detects the timing at which the maximum correlation value among the power-averaged correlation values is calculated as TTI timing. Then TTI timing/frame timing detection section 1120 outputs TTI timing information to synchronization channel correlation section 1110.

After receiving the TTI timing information, synchronization channel correlation section 1110 extracts an OFDM symbol at the above-described specific symbol position, and an OFDM symbol at the end of the TTI, calculates the frequency domain correlation between each extracted OFDM symbol and an SCH2 sequence replica, and outputs the calculated correlation values to TTI timing/frame timing detection section 1120.

TTI timing/frame timing detection section 1120 has correlation values from synchronization channel correlation section 1110 as input, and determines TTI timing to be TTI timing other than frame timing when a correlation value relating to an OFDM symbol at a specific symbol position is large and a correlation value relating to an OFDM symbol at the end of a TTI is small, and conversely determines TTI timing to be frame timing when a correlation value relating to an OFDM symbol at the end of a TTI is large and a correlation value relating to an OFDM symbol at a specific symbol 1 position is small. Then TTI timing/frame timing detection section 1120 outputs frame timing information to scrambling code identification section 245.

In the above description, a TTI starting symbol, ending symbol, and specific symbol have all been taken as being of the same SCH sequence, but this is not a limitation, and different SCH sequences may be used for a starting symbol, ending symbol, and specific symbol.

Thus, according to Embodiment 8, base station apparatus 1000 that performs multicarrier communication is equipped with a frame configuration section 1010 that forms a frame by mapping a synchronization sequence for performing synchronization in the frequency domain in the starting symbol and a predetermined symbol of TTIs in subcarriers, and a radio transmission section 145 that transmits the frame; and frame configuration section 1010 maps the synchronization sequence, changing the position of the predetermined symbol between the starting TTI of the frame and a TTI other than the starting TTI.

By this means, after TTI timing has been detected on the frame receiving side using a synchronization sequence mapped on the starting symbols of TTIs, determination as frame timing or TTI timing that is not frame timing can be made according to the position of the above-described predetermined symbol. Also, since a synchronization sequence is mapped in the frequency domain and is repeatedly mapped in the time domain, a time diversity effect can be gained.

In the starting TTI, frame configuration section 1010 takes the predetermined symbol to be the ending symbol.

Also, according to Embodiment 8, mobile station apparatus 1100 that performs a cell search based on a frame transmitted from base station apparatus 1000 is equipped with a radio reception section 210 that receives a frame in which a synchronization sequence for performing synchronization is mapped in the frequency domain in the starting symbol and a predetermined symbol of TTIs in subcarriers, and the position of the predetermined symbol differs between a starting TTI and a TTI other than that starting TTI; a synchronization channel correlation section 1110 that extracts symbols in subcarriers at TTI intervals from the frame, and performs the frequency domain multiplication of the synchronization sequence by the extracted symbols and calculates a correlation; and a TTI timing/frame timing detection section 1120 that detects TTI timing based on a correlation value calculated by synchronization channel correlation section 1110, and outputs TTI timing information to the correlation section; wherein synchronization channel correlation section 1110 multiplies the predetermined symbol by the synchronization sequence in accordance with the TTI timing information and calculates a correlation, and TTI timing/frame timing detection section 1120 identifies the starting TTI and a TTI other than that starting TTI based on a correlation value between the predetermined symbol and the synchronization sequence.

By this means, after TTI timing has been detected using a synchronization sequence mapped on the starting symbols of TTIs, determination as frame timing or TTI timing that is not frame timing can be made according to the position of the above-described predetermined symbol. Also, since a synchronization sequence is mapped in the frequency domain and is repeatedly mapped in the time domain, a time diversity effect can be gained.

### (Embodiment 9)

In Embodiment 8, the position of a specific symbol in which an SCH sequence is mapped on a symbol other than a TTI starting symbol in a TTI other than a frame starting TTI is common to all TTIs other than the frame starting TTI. In contrast, in Embodiment 9, a specific symbol position in TTIs other than a frame starting TTI is varied according to the TTI (for example, the TTI identification number). That is to say, TTI identification information is added using the specific symbol position. By this means, which TTI a particular TTI is can be identified by detecting the position of a specific symbol in that TTI, and as a result, frame timing can also be identified. The main configurations of a base station apparatus and mobile station apparatus according to Embodiment 9 are the same as the main configurations of base station apparatus 1000 and mobile station apparatus 1100 according to Embodiment 8, and therefore FIG.24 and FIG.26 will be used in describing this embodiment.

In Embodiment 9, frame configuration section 1010 has an SCH2 sequence as input from synchronization channel generation section 115, and inserts the SCH sequence in a frame, changing the symbol position at which the SCH sequence is mapped in the frequency domain so that differentiation is provided between the frame starting TTI and other TTIs. Furthermore, frame configuration section 1010 inserts the SCH sequence in a frame, changing the symbol position at which the SCH sequence is mapped in other than the TTI starting symbol according to TTI identification information so that differentiation is also provided between TTIs other than the frame starting TTI.

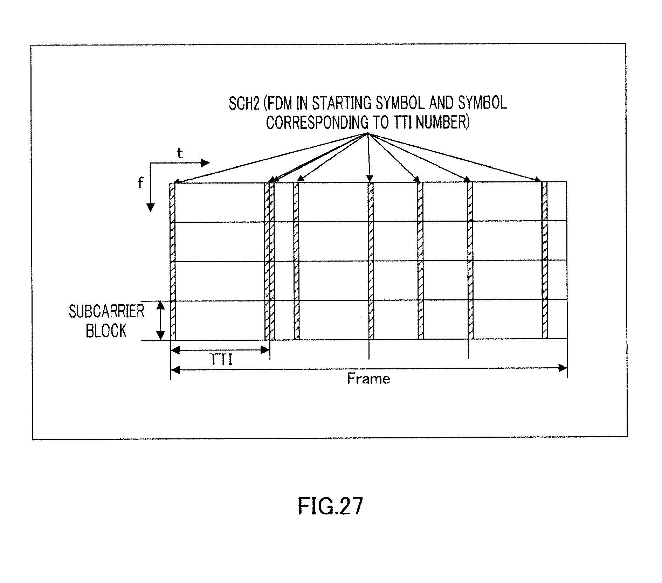

Specifically, as shown in FIG.27, in a frame starting TTI, frame configuration section 1010 maps an SCH2 sequence in the frequency domain in the TTI starting and ending symbols, and in a TTI other than a frame starting TTI, frame configuration section 1010 maps an SCH2 sequence in the frequency domain in the TTI starting symbol and a predetermined symbol corresponding to a TTI identification number of other than the TTI starting or ending symbol.

Next, to explain the operation of mobile station apparatus 1100 of Embodiment 9, synchronization channel correlation section 1110 has a received signal that has undergone FFT processing as input from FFT processing section 225, extracts OFDM symbols at TTI intervals, and calculates the frequency domain correlation between an extracted signal and an SCH2 sequence replica. Then synchronization channel correlation section 1110 performs power averaging between TTIs of correlation values for OFDM symbols having the same symbol position in each TTI, and outputs a power average value to TTI timing/frame timing detection section 1120.

TTI timing/frame timing detection section 1120 detects the timing at which the maximum correlation value among the power-averaged correlation values is calculated as TTI timing. Then TTI timing/frame timing detection section 1120 outputs TTI timing information to synchronization channel correlation section 1110.

After receiving the TTI timing information, synchronization channel correlation section 1110 extracts OFDM symbols corresponding to above-described specific symbol position candidates, calculates the frequency domain correlation between each extracted OFDM symbol and an SCH2 sequence replica, and outputs the calculated correlation values to TTI timing/frame timing detection section 1120.

TTI timing/frame timing detection section 1120 has correlation values from synchronization channel correlation section 1110 as input, detects the specific symbol position at which the maximum correlation value is calculated, and identifies the TTI identification information corresponding to that specific symbol. As the positional relationship in a frame between each TTI timing and frame timing is decided beforehand, when this TTI identification information is found, TTI timing/frame timing detection section 1120 can identify the frame timing accordingly. Then frame timing information is output to scrambling code identification section 245.

Thus, according to Embodiment 9, base station apparatus 1000 that performs multicarrier communication is equipped with a frame configuration section 1010 that forms a frame by mapping a synchronization sequence for performing synchronization in the frequency domain in the starting symbol and a predetermined symbol of TTIs in subcarriers, and a radio transmission section 145 that transmits the frame; and frame configuration section 1010 maps the synchronization sequence, changing the position of the predetermined symbol between the starting TTI of the frame and a TTI other than the starting TTI, and also changes the predetermined symbol in which the SCH sequence is mapped in a TTI other than the TTI starting TTI on a TTI-by-TTI basis. That is to say, frame configuration section 1010 maps the synchronization sequence, changing the predetermined symbol on a TTI-by-TTI basis.

By this means, after TTI timing has been detected on the frame receiving side, a TTI can be identified by the position of the predetermined symbol. Ascertaining the positional relationship between each TTI and frame timing beforehand enables frame timing to be identified immediately when a TTI can be identified.

Also, according to Embodiment 9, mobile station apparatus 1100 that performs a cell search based on a frame transmitted from base station apparatus 1000 is equipped with a radio reception section 210 that receives a frame in which a synchronization sequence for performing synchronization is mapped in the frequency domain in the starting symbol and a predetermined symbol of TTIs in subcarriers, and the position of the predetermined symbol differs between a starting TTI and a TTI other than that starting TTI; a synchronization channel correlation section 1110 that extracts symbols in subcarriers at TTI intervals from the frame, and performs the frequency domain multiplication of the synchronization sequence by the extracted symbols for calculating a correlation; and a TTI timing/frame timing detection section 1120 that detects TTI timing based on a correlation value calculated by synchronization channel correlation section 1110, and outputs TTI timing information to the correlation section; wherein synchronization channel correlation section 1110 multiplies the predetermined symbol by the synchronization sequence in accordance with the TTI timing information for calculating a correlation, and TTI timing/frame timing detection section 1120 identifies the starting TTI and a TTI other than that starting TTI based on a correlation value between the predetermined symbol and the synchronization sequence. Then radio reception section 210 receives the frame in which the synchronization sequence is mapped with the predetermined symbol changed on a TTI-by-TTI basis, and TTI timing/frame timing detection section 1120 identifies a TTI based on the correlation value between the predetermined symbol and the synchronization sequence.

By this means, after TTI timing has been detected, a TTI can be identified by the position of the predetermined symbol. Ascertaining the positional relationship between each TTI and frame timing beforehand enables frame timing to be identified immediately when a TTI can be identified.

### (Embodiment 10)

In Embodiment 9, a specific symbol position in TTIs other than a frame starting TTI is varied according to the TTI (for example, the TTI identification number). In contrast, in Embodiment 10, subcarriers are divided into a plurality of subcarrier blocks, and a specific symbol position at which an SCH sequence per subcarrier block contained in a TTI is mapped is varied according to the TTI (for example, the TTI identification number). That is to say, TTI identification information is added using a combination of symbol positions at which a per-subcarrier-block SCH sequence is mapped. Thus, TTI identification information is represented by an SCH sequence 2-dimensional arrangement pattern (time, frequency) in a TTI. By this means, a symbol position at which a per-subcarrier-block SCH sequence is mapped in a TTI is detected, and which TTI a particular TTI is can be identified from a combination of the subcarrier block and the symbol position at which the SCH sequence is mapped, and as a result, frame timing can also be identified. The main configurations of a base station apparatus and mobile station apparatus according to Embodiment 10 are the same as the main configurations of base station apparatus 1000 and mobile station apparatus 1100 according to Embodiment 8, and therefore FIG.24 and FIG.26 will be used in describing this embodiment.

In Embodiment 10, frame configuration section 1010 has an SCH2 sequence as input from synchronization channel generation section 115, and inserts the SCH sequence in a frame, changing the symbol position at which the SCH sequence is mapped in the frequency domain so that differentiation is provided between TTIs.

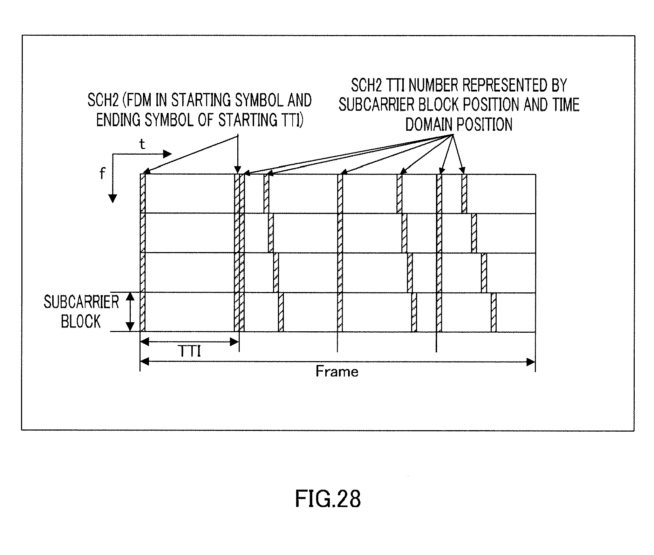

Specifically, as shown in FIG.28, anSCH2 sequence is mapped in common on the starting symbol of each TTI, and in other than starting symbols, the symbol position at which an SCH2 sequence is mapped in each subcarrier block is varied according to each TTI. When a position at which an SCH sequence is mapped in a TTI is made a common symbol position in all subcarrier blocks, as in Embodiment 9, only the same number of TTI identification information items as the number of symbols included in one TTI, at most, can be represented, but by using a frame configuration such as that of this embodiment, TTI identification information items of subcarrier blocks several times the number of symbol positions in which an SCH sequence of each subcarrier block is mapped in a TTI can be represented. Specifically, when there are four subcarrier blocks, and six symbol positions at which an SCH of each subcarrier block is mapped in a TTI (excluding starting symbols), the number of TTI identification information items that can be repeated is 6 to the fourth power.

Next, to explain the operation of mobile station apparatus 1100 of Embodiment 10, synchronization channel correlation section 1110 has a received signal that has undergone FFT processing as input from FFT processing section 225, extracts OFDM symbols at TTI intervals, and calculates the frequency domain correlation between an extracted signal and an SCH2 sequence replica. Then synchronization channel correlation section 1110 performs power averaging between TTIs of correlation values for OFDM symbols having the same symbol position in each TTI, and outputs a power average value to TTI timing/frame timing detection section 1120.

TTI timing/frame timing detection section 1120 detects the timing at which the maximum correlation value among the power-averaged correlation values is calculated as TTI timing. Then TTI timing/frame timing detection section 1120 outputs TTI timing information to synchronization channel correlation section 1110.

After receiving the TTI timing information, synchronization channel correlation section 1110 extracts a symbol group of symbol position candidates in which an SCH sequence of each subcarrier block is mapped in a TTI, calculates the frequency domain correlation between an extracted symbol group of each subcarrier block and an SCH2 sequence replica, and associates the calculated correlation values with a subcarrier block and symbol position, and outputs them to TTI timing/frame timing detection section 1120.

TTI timing/frame timing detection section 1120 has correlation values associated with a subcarrier block and symbol position from synchronization channel correlation section 1110 as input, and identifies current TTI identification information (for example, a TTI identification number) based on these input information items. As the positional relationship in a frame between each TTI timing and frame timing is decided beforehand, when this TTI identification information is found, TTI timing/frame timing detection section 1120 can identify the frame timing accordingly. Then frame timing information is output to scrambling code identification section 245.

Thus, according to Embodiment 10, base station apparatus 1000 that performs multicarrier communication is equipped with a frame configuration section 1010 that forms a frame by mapping a synchronization sequence for performing synchronization in the frequency domain in the starting symbol and a predetermined symbol of TTIs in subcarriers, and a radio transmission section 145 that transmits the frame; and frame configuration section 1010 maps the synchronization sequence, changing the position of the predetermined symbol between the starting TTI of the frame and a TTI other than the starting TTI, and also changes the predetermined symbol in which the SCH sequence is mapped on a TTI-by-TTI basis by shifting it for each subcarrier block. That is to say, frame configuration section 1010 maps the synchronization sequence, changing the predetermined symbol position on a TTI-by-TTI basis by shifting it for each subcarrier block.

By this means, information that can be represented by the position of a predetermined symbol increases, making it possible to handle an increased number of TTIs in a frame.

Also, according to Embodiment 10, mobile station apparatus 1100 that performs a cell search based on a frame transmitted from base station apparatus 1000 is equipped with a radio reception section 210 that receives a frame in which a synchronization sequence for performing synchronization is mapped in the frequency domain in the starting symbol and a predetermined symbol of TTIs in subcarriers, and the position of the predetermined symbol differs between a starting TTI and a TTI other than that starting TTI; a synchronization channel correlation section 1110 that extracts symbols in subcarriers at TTI intervals from the frame, and performs the frequency domain multiplication of the synchronization sequence by the extracted symbols for calculating a correlation; and a TTI timing/frame timing detection section 1120 that detects TTI timing based on a correlation value calculated by synchronization channel correlation section 1110, and outputs TTI timing information to the correlation section; wherein synchronization channel correlation section 1110 multiplies the predetermined symbol by the synchronization sequence in accordance with the TTI timing information and calculates a correlation, and TTI timing/frame timing detection section 1120 identifies the starting TTI and a TTI other than that starting TTI based on a correlation value between the predetermined symbol and the synchronization sequence. Then radio reception section 210 receives the frame in which the predetermined symbol in which a synchronization sequence is mapped is shifted for each subcarrier block and changed on a TTI-by-TTI basis, and TTI timing/frame timing detection section 1120 identifies a TTI based on the correlation value between the predetermined symbol and the synchronization sequence.

Bythismeans, information that can be represented by the position of a predetermined symbol increases, making it possible to handle an increased number of TTIs in a frame.

### (Embodiment 11)

In Embodiment 8, only one type of SCH sequence is used. In contrast, in Embodiment 11, a TTI starting symbol SCH sequence and an SCH sequence mapped in other than a TTI starting symbol are different symbols (an SCH1 sequence and SCH2 sequence). The main configurations of a base station apparatus and mobile station apparatus according to Embodiment 11 are the same as the main configurations of base station apparatus 1000 and mobile station apparatus 1100 according to Embodiment 8, and therefore FIG.24 and FIG.26 will be used in describing this embodiment.

In Embodiment 11, frame configuration section 1010 has an SCH1 sequence and SCH2 sequence as input from synchronization channel generation section 115, maps an SCH1 sequence in the frequency domain in the starting symbol of each TTI, and inserts an SCH2 sequence in a frame, changing the symbol position at which the SCH sequence is mapped in the frequency domain so that differentiation is provided between the frame starting TTI and other TTIs.

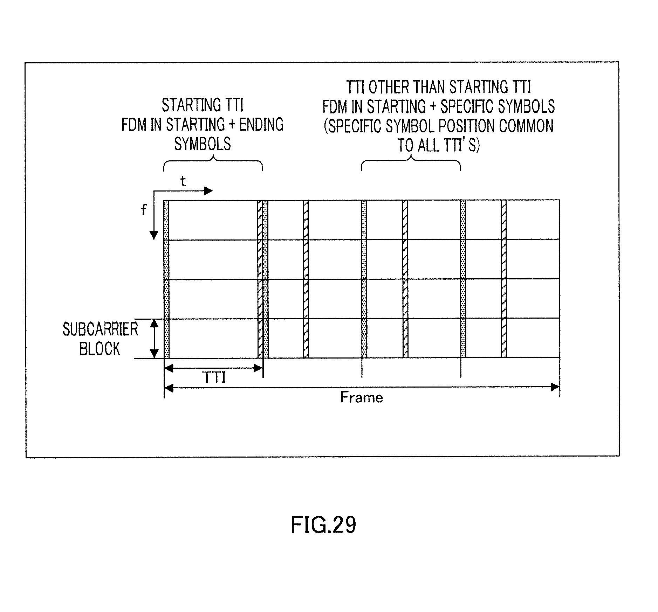

Specifically, as shown in FIG.29, in a frame starting TTI, frame configuration section 1010 maps an SCH1 sequence in the frequency domain in the TTI starting symbol and maps an SCH2 sequence in the frequency domain in the TTI ending symbol, and in a TTI other than a frame starting TTI, frame configuration section 1010 maps an SCH1 sequence in the frequency domain in the TTI starting symbol and maps an SCH2 sequence in a predetermined symbol (denoted by "specific symbol" in FIG.29) other than the TTI starting or ending symbol.

Next, to explain the operation of mobile station apparatus 1100 of Embodiment 11, synchronization channel correlation section 1110 has a received signal that has undergone FFT processing as input from FFT processing section 225, extracts OFDM symbols at TTI intervals, and calculates the frequency domain correlation between an extracted signal and an SCH1 sequence replica. Then synchronization channel correlation section 1110 performs power averaging between TTIs of correlation values for OFDM symbols having the same symbol position in each TTI, and outputs a power average value to TTI timing/frame timing detection section 1120.

TTI timing/frame timing detection section 1120 detects the timing at which the maximum correlation value among the power-averaged correlation values is calculated as TTI timing. Then TTI timing/frame timing detection section 1120 outputs TTI timing information to synchronization channel correlation section 1110.

After receiving the TTI timing information, synchronization channel correlation section 1110 extracts OFDM symbols corresponding to above-described specific symbol position candidates, calculates the frequency domain correlation between each extracted OFDM symbol and an SCH2 sequence replica, and outputs the calculated correlation values to TTI timing/frame timing detection section 1120.

TTI timing/frame timing detection section 1120 has correlation values from synchronization channel correlation section 1110 as input, detects the specific symbol position at which the maximum correlation value is calculated, and identifies the TTI identification information corresponding to that specific symbol. As the positional relationship in a frame between each TTI timing and frame timing is decided beforehand, when this TTI identification information is found, TTI timing/frame timing detection section 1120 can identify the frame timing accordingly. Then frame timing information is output to scrambling code identification section 245.

Thus, according to Embodiment 11, base station apparatus 1000 that performs multicarrier communication is equipped with a frame configuration section 1010 that forms a frame by mapping a synchronization sequence for performing synchronization in the frequency domain in the starting symbol and a predetermined symbol of TTIs in subcarriers, and a radio transmission section 145 that transmits the frame; and frame configuration section 1010 maps the synchronization sequence, changing the position of the predetermined symbol between the starting TTI of the frame and a TTI other than the starting TTI, and maps different sequences in the starting symbol and the predetermined symbol.

By this means, since different sequences are mapped on a starting symbol and a predetermined symbol, the receiving side is not affected by a sequence mapped on a predetermined symbol when detecting TTI timing using a starting symbol, enabling the accuracy of TTI timing detection to be improved.

### (Embodiment 12)

A frame of Embodiment 1 is configured with an SCH1 sequence mapped in the time domain in the frame starting TTI, and an SCH2 sequence mapped in the time domain in other TTIs, in the same subcarrier. Also, a frame of Embodiment 4, while being the same as in Embodiment 1 with regard to time concerning TTIs in which an SCH1 sequence and SCH2 sequence are mapped, has different subcarriers in which an SCH1 sequence and SCH2 sequence are mapped. In contrast, in a frame of Embodiment 12, an SCH sequence is mapped on different subcarriers in a frame starting TTI and other TTIs. Thus, differentiation is provided between a frame starting TTI and other TTIs. Furthermore, the pattern (combination) of subcarriers in which a SCH sequence is mapped also differs for individual TTIs other than frame starting TTIs. Thus, mutual differentiation is also provided for individual TTIs other than frame starting TTIs. Also, only one type of SCH sequence - namely, an SCH2 sequence - is used. The main configurations of a base station apparatus and mobile station apparatus according to Embodiment 12 are the same as the main configurations of base station apparatus 100 and mobile station apparatus 200 according to Embodiment 1, and therefore FIG.2 and FIG.4 will be used in describing this embodiment.

Frame configuration section 120 has a modulated signal from modulation section 110 as input, and also has SCH sequences from synchronization channel generation section 115 as input, and forms a frame by mapping the modulated signal and SCH sequences in predetermined symbols specified by subcarrier (that is, frequency) and time.

In Embodiment 12, frame configuration section 120 has one type of SCH sequence (here, an SCH2 sequence) as input from synchronization channel generation section 115, and inserts SCH2 sequences so that the combinations of subcarriers in which an SCH2 sequence is mapped differs for a frame starting TTI and another TTI. Furthermore, frame configuration section 120 inserts an SCH2 sequence so that the combinations of subcarriers in which an SCH2 sequence is mapped also differ mutually for individual TTIs other than a frame starting TTI.

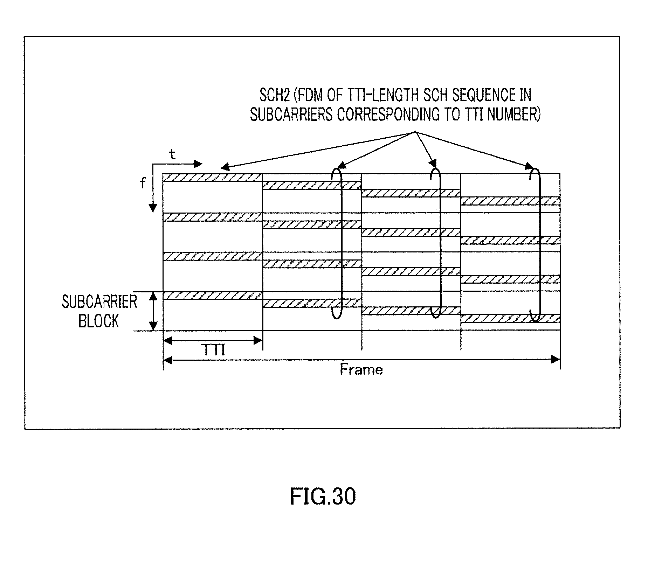

Specifically, as shown in FIG.30, SCH2 sequences are mapped on mutually different subcarrier combinations in all TTIs. In FIG.30, in particular, a subcarrier in which an SCH sequence is mapped within each subcarrier block is common within a TTI . Also, in the starting TTI, an SCH sequence is mapped on boundary subcarriers in the frequency domain.

Synchronization channel correlation section 230 has a received signal that has undergone FFT processing as input from FFT processing section 225, extracts one TTI length of all combinations of subcarrier signals in which an SCH is multiplexed, calculates the time domain correlation between these extracted signals and an SCH sequence replica (SCH2 sequence replica) input from synchronization channel sequence replica generation section 235, and calculates a correlation value by performing in-phase addition.

Furthermore, synchronization channel correlation section 230 performs power combining of correlation values between subcarriers for each combination of subcarriers in which an SCH sequence is multiplexed, and outputs the correlation value power combining results for each symbol to TTI timing/frame timing detection section 240.

TTI timing/frame timing detection section 240 has correlation values (after power combining) according to the SCH2 sequence for each subcarrier combination in which arrangement is performed for each symbol timing in one TTI as input from synchronization channel correlation section 230, and detects the timing at which the maximum correlation value among the input correlation values is calculated, and the subcarrier combination in which an SCH sequence is mapped. Then TTI timing/frame timing detection section 240 identifies the timing at which a maximum correlation value is calculated as TTI timing, and identifies TTI identification information from the subcarrier combination for which the maximum correlation value is calculated. When this TTI identification information is found, TTI timing/frame timing detection section 240 can identify the frame timing accordingly. If the subcarrier combination for which the maximum correlation value is calculated is the combination in the frame starting TTI, frame timing can be identified directly. Then frame timing information is output to scrambling code identification section 245.

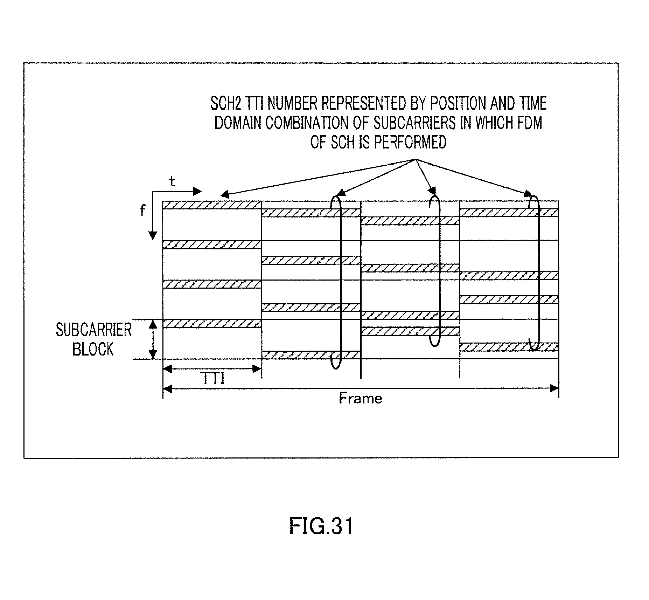

In the above description, a case has been described in which an SCH sequence is mapped on the same subcarrier in each subcarrier block within the same TTI, as shown in FIG.30, but this embodiment is not limited to this case, and an SCH sequence may also be mapped on a different subcarrier in each subcarrier block within the same TTI, as shown in FIG.31. The essential point is for TTIs to be able to be differentiated by each having different combination of subcarriers in which an SCH sequence is mapped. However, having an SCH sequence mapped on a different subcarrier in each subcarrier block within the same TTI, as shown in FIG.31, enables more information to be represented, making it possible to handle an increased number of TTIs in a frame.

Also, in the above description, a case has been described in which one type of SCH sequence is mapped within a frame, but this embodiment is not limited to this case, and different SCH sequences may be mapped in a frame starting TTI and other TTIs, for example.

Thus, according to Embodiment 12, base station apparatus 100 is equipped with a frame configuration section 120 that forms a frame by mapping a frame synchronization sequence used for frame timing identification and a TTI synchronization sequence used for TTI timing identification such that the frame synchronization sequence and the TTI synchronization sequence do not overlap with each other in the same symbols specified by frequency and time, and a radio transmission section 145 that transmits the frame; and frame configuration section 120 maps the frame synchronization sequence at a predetermined position from the frame starting symbol, and maps the TTI synchronization sequence at a predetermined position from the TTI starting symbol, and also makes a combination of subcarriers in which the frame synchronization sequence is mapped in the frame starting TTI, and a combination of subcarriers in which the TTI synchronization sequence is mapped in a TTI other than the frame starting TTI, different.

By this means, differentiation between frame timing and TTI timing that is not frame timing can be performed on the frame receiving side (in mobile station apparatus 200) by detecting a combination of subcarriers in which a synchronization sequence is mapped.

Also, base station apparatus 100 is equipped with a frame configuration section 120 that forms a frame by mapping a frame synchronization sequence used for frame timing identification and a TTI synchronization sequence used for TTI timing identification such that the frame synchronization sequence and the TTI synchronization sequence do not overlap with each other in the same symbols specified by frequency and time, and a radio transmission section 145 that transmits the frame; and frame configuration section 120 maps the frame synchronization sequence at a predetermined position from the frame starting symbol, and maps the TTI synchronization sequence at a predetermined position from the TTI starting symbol, and also makes a combination of subcarriers in which the frame synchronization sequence or the TTI synchronization sequence is mapped different in each TTI contained in a frame.

By this means, a TTI can be identified by detecting a combination of subcarriers in which a synchronization sequence is mapped. Ascertaining the positional relationship between each TTI and frame timing beforehand enables frame timing to be identified immediately when a TTI can be identified.

Also, according to Embodiment 12, mobile station apparatus 200 is equipped with a radio reception section 210 that receives a frame in which a frame synchronization sequence (SCH1 sequence) used for frame timing identification and a TTI synchronization sequence (SCH2 sequence) used for TTI timing identification are mapped such that the frame synchronization sequence and the TTI synchronization sequence do not overlap with each other in the same symbols specified by frequency and time; a synchronization channel correlation section 230 that calculates correlations by sequentially multiplying all the frame synchronization sequence and the TTI synchronization sequence candidates by the frame; and a TTI timing/frame timing detection section 240 that detects the frame timing and the TTI timing based on a correlation value calculated by synchronization channel correlation section 230; wherein radio reception section 210 receives a frame in which a combination of subcarriers in which the frame synchronization sequence is mapped in the frame starting TTI, and a combination of subcarriers in which the TTI synchronization sequence is mapped in a TTI other than the frame starting TTI, differ; synchronization channel correlation section 230 extracts one TTI length of subcarrier signals in which the frame synchronization sequence and the TTI synchronization sequence are mapped from a received frame, performs the time domain multiplication of the extracted subcarrier signals by the relevant frame synchronization sequence and the TTI synchronization sequence, and calculates a correlation; and TTI timing/frame timing detection section 240 detects TTI timing based on the correlation value of each combination of subcarriers calculated by synchronization channel correlation section 230, and identifies each TTI.

By this means, differentiation between frame timing and TTI timing that is not frame timing can be performed by detecting a combination of subcarriers in which a synchronization sequence is mapped.

### Industrial Applicability

A base station apparatus and mobile station apparatus of the present invention are useful in increasing the speed of a cell search by introducing TTI timing identification into the cell search.

## Claims

1. A basestation apparatusthat performs multicarrier communication, comprising:
a frame forming section that forms a frame by mapping a frame synchronization sequence used for frame timing identification and a TTI synchronization sequence used for TTI timing identification such that the frame synchronization sequence and the TTI synchronization sequence do not overlap with each other in same symbols specified by frequency and time; and
a transmitting section that transmits said frame,
wherein said frame forming section maps said frame synchronization sequence at a predetermined posit ion from a frame starting symbol, and maps said TTI synchronization sequence at a predetermined position from a TTI starting symbol.

2. The base station apparatus according to claim 1, wherein said frame forming section forms a frame by mapping said frame synchronization sequence in a time domain aligned with a start of a frame starting TTI, and mapping said TTI synchronization sequence in a time domain aligned with a start of a TTI other than said starting TTI, in a predetermined plurality of subcarriers.

3. The base station apparatus according to claim 2, wherein said frame forming section forms a frame in which subcarriers in which said frame synchronization sequence and said TTI synchronization sequence are mapped are present in a proportion of at least one in a subcarrier block composed of a plurality of subcarriers.

4. The base station apparatus according to claim 2, wherein said frame forming section forms a frame by mapping said frame synchronization sequence and said TTI synchronization sequence in different subcarriers.

5. The base station apparatus according to claim 1, wherein said frame forming section forms a frame by mapping frame synchronization divided sequences resulting from dividing said frame synchronization sequence into a predetermined number in a time domain aligned with a start of a frame in an adjacent plurality of subcarriers, and mapping TTI synchronization divided sequences resulting from dividing said TTI synchronization sequence into a predetermined number in a time domain aligned with a start of a TTI other than said starting TTI in an adjacent plurality of subcarriers.

6. The base station apparatus according to claim 1, wherein said frame forming section forms a frame by mapping said frame synchronization sequence in a time domain aligned with a start of a frame in predetermined subcarriers, and mapping said TTI synchronization sequence aligned with a start of all TTIs in subcarriers other than said predetermined subcarriers in which said frame synchronization sequence is mapped.

7. The base station apparatus according to claim 6, wherein said frame synchronization sequence and said TTI synchronization sequence comprise an identical sequence.

8. The base station apparatus according to claim 1, wherein said frame forming section forms a frame by mapping said frame synchronization sequence equal to a frame length in a time domain in predetermined subcarriers, and mapping said TTI synchronization sequence equal to a TTI length in a time domain in subcarriers other than said predetermined subcarriers in which that frame synchronization sequence is mapped.

9. The base station apparatus according to claim 1, wherein said frame forming section makes a combination of subcarriers in which said frame synchronization sequence is mapped in a frame starting TTI, and a combination of subcarriers in which said TTI synchronization sequence is mapped in a TTI other than said frame starting TTI, different.

10. The base station apparatus according to claim 1, wherein said frame forming section makes a combination of subcarriers in which said frame synchronization sequence or said TTI synchronization sequence is mapped different in each TTI contained in a frame.

11. Abase station apparatus that performs multicarrier communication, comprising:
a frame forming section that forms a frame by mapping a synchronization sequence for performing synchronization in a frequency domain in a starting symbol and a predetermined symbol of each TTI in each subcarrier; and
a transmitting section that transmits said frame,
wherein said frame forming section maps said synchronization sequence, changing a position of said predetermined symbol between said frame starting TTI and a TTI other than said starting TTI.

12. The base station apparatus according to claim 11, wherein said frame forming section takes said predetermined symbol to be an ending symbol in said starting TTI.

13. The base station apparatus according to claim 11, wherein said frame forming section maps said synchronization sequence, changing said predetermined symbol for each said TTI.

14. The base station apparatus according to claim 11, wherein said frame forming section forms a frame in which said predetermined symbol in which said synchronization sequence is mapped is shifted for each subcarrier block and changed for each TTI.

15. The base station apparatus according to claim 11, wherein said frame forming section forms a frame by mapping different sequences in said starting symbol and said predetermined symbol.

16. A mobile station apparatus that performs a cell search based on a frame transmitted from a base station apparatus, comprising:
a receiving section that receives a frame in which a frame synchronization sequence used for frame timing identification is mapped at a predetermined position from a frame starting symbol and a TTI synchronization sequence used for TTI timing identification is mapped at a predetermined position from a TTI starting symbol, and said frame synchronization sequence and said TTI synchronization sequence are mapped such that the frame synchronization sequence and the TTI synchronization sequence do not overlap with each other in same symbols specified by frequency and time;
a correlation section that calculates correlations by sequentially multiplying all said frame synchronization sequence and said TTI synchronization sequence candidates by said frame; and
a detection section that detects said frame timing and said TTI timing based on a correlation value calculated by said correlation section.

17. The mobile station apparatus according to claim 16, wherein:
said receiving section receives a frame in which said frame synchronization sequence is mapped in a time domain aligned with a start of a frame starting TTI, and said TTI synchronization sequence is mapped in a time domain aligned with a start of a TTI other than said starting TTI, in a predetermined plurality of subcarriers;
said correlation section extracts a TTI length of subcarrier signals in which said frame synchronization sequence and said TTI synchronization sequence are mapped from a received frame, performs the time domain multiplication of extracted subcarrier signals by that frame synchronization sequence and said TTI synchronization sequence, and calculates a correlation; and
said detection section detects TTI timing based on a correlation value according to said TTI synchronization sequence, and detects frame timing based on a correlation value according to said frame synchronization sequence.

18. The mobile station apparatus according to claim 17, wherein:
said detection section outputs TTI timing information to said correlation section upon detecting TTI timing that is not said frame timing; and
said correlation section calculates a correlation only at said TTI timing of said frame in accordance with said TTI timing information.

19. The mobile station apparatus according to claim 17, wherein said detection section identifies said TTI timing and said frame timing based on a result of a comparison between a difference between a maximum correlation value according to said TTI synchronization sequence and a maximum correlation value according to said frame synchronization sequence, and a threshold value.

20. The mobile station apparatus according to claim 17, wherein:
said receiving section receives said frame in which said frame synchronization sequence and said TTI synchronization sequence are mapped on different subcarriers; and
said correlation section extracts a TTI length of subcarrier signals in which said frame synchronization sequence is mapped and subcarrier signals in which said TTI synchronization sequence is mapped at identical symbol timing, performs the time domain multiplication of mapped said frame synchronization sequence or said TTI synchronization sequence for extracted subcarrier signals, and calculates a correlation.

21. The mobile station apparatus according to claim 16, wherein:
said receiving section receives a frame in which frame synchronization divided sequences resulting from dividing said frame synchronization sequence into a predetermined number are mapped in a time domain aligned with a start of a frame in an adjacent plurality of subcarriers, and TTI synchronization divided sequences resulting from dividing a TTI synchronization sequence into a predetermined number in a time domain are mapped aligned with a start of a TTI other than said starting TTI in an adjacent plurality of subcarriers;
said correlation section extracts a TTI length of subcarrier signals in which said frame synchronization sequence and said TTI synchronization sequence are mapped from a received frame, performs the time domain multiplication of corresponding said frame synchronization divided sequences and said TTI synchronization divided sequences for extracted subcarrier signals, and calculates a correlation; and
said detection section detects TTI timing based on a correlation value according to said TTI synchronization divided sequence, and detects frame timing based on a correlation value according to said frame synchronization divided sequence.

22. The mobile station apparatus according to claim 16, wherein:
said receiving section receives a frame in which said frame synchronization sequence is mapped in a time domain aligned with a start of a frame in predetermined subcarriers, and said TTI synchronization sequence is mapped aligned with a start of all TTIs in subcarriers other than said predetermined subcarriers in which said frame synchronization sequence is mapped;
said correlation section extracts a TTI length of subcarrier signals in which said frame synchronization sequence and said TTI synchronization sequence are mapped from a received frame, performs the time domain multiplication of that frame synchronization sequence and said TTI synchronization sequence by extracted subcarrier signals, and calculates a correlation; and
said detection section detects TTI timing based on a correlation value according to said TTI synchronization sequence, and detects frame timing based on a correlation value according to said frame synchronization sequence.

23. The mobile station apparatus according to claim 22, wherein said detection section identifies said TTI timing and said frame timing according to an amount of difference between a maximum correlation value according to said TTI synchronization sequence and a maximum correlation value according to said frame synchronization sequence.

24. The mobile station apparatus according to claim 22, wherein said detection section, when detected said frame timing and detected said TTI timing corresponding to that frame timing coincide, identifies detected said frame timing as frame timing.

25. The mobile station apparatus according to claim 22, wherein:
said receiving section receives a frame in which said frame synchronization sequence and said TTI synchronization sequence comprise an identical sequence;
said detection section detects said TTI timing based on a correlation value according to said TTI synchronization sequence, and outputs TTI timing information to said correlation section; and
said correlation section calculates a correlation only between a subcarrier signal in which said frame synchronization sequence is mapped and a subcarrier signal in which said TTI synchronization sequence is mapped at said TTI timing in accordance with said TTI timing information.

26. The mobile station apparatus according to claim 16, wherein:
said receiving section receives a frame in which said frame synchronization sequence equal to a frame length is mapped in a time domain in predetermined subcarriers, and a TTI synchronization sequence equal to a TTI length is mapped in a time domain in subcarriers other than said predetermined subcarriers in which said frame synchronization sequence is mapped;
said correlation section, from a received frame, extracts a frame length of subcarrier signals in which said frame synchronization sequence is mapped, and performs the time domain multiplication of that frame synchronization sequence by extracted said subcarrier signals and calculates a correlation, and also extracts a TTI length of subcarrier signals in which said TTI synchronization sequence is mapped, and performs the time domain multiplication of that TTI synchronization sequence by extracted said subcarrier signals and calculates a correlation; and
said detection section detects TTI timing based on a correlation value according to said TTI synchronization sequence, and detects frame timing based on a correlation value according to said frame synchronization sequence.

27. The mobile station apparatus according to claim 26, wherein:
said detection section outputs TTI timing information to said correlation section upon detecting TTI timing that is not said frame timing; and
said correlation section calculates a correlation according to said frame synchronization sequence only at said TTI timing in accordance with said TTI timing information.

28. The mobile station apparatus according to claim 26, wherein said detection section, when detected said frame timing and detected said TTI timing corresponding to that frame timing coincide, identifies detected said frame timing as frame timing.

29. The mobile station apparatus according to claim 16, wherein:
said receiving section receives a frame in which a combination of subcarriers in which said frame synchronization sequence is mapped in a frame starting TTI, and a combination of subcarriers in which said TTI synchronization sequence is mapped in a TTI other than said frame starting TTI, are different;
said correlation section extracts a TTI length of subcarrier signals in which said frame synchronization sequence and said TTI synchronization sequence are mapped from a received frame, performs the time domain multiplication of that frame synchronization sequence and said TTI synchronization sequence by extracted subcarrier signals, and calculates a correlation; and
said detection section detects frame timing and TTI timing based on a correlation value for each said combination of subcarriers calculated by said correlation section, and identifies each TTI.

30. A mobile station apparatus that performs a cell search based on a frame transmitted from a base station apparatus, comprising:
a receiving section that receives a frame in which a synchronization sequence for performing synchronization is mapped in a frequency domain in a starting symbol and a predetermined symbol of each TTI in each subcarrier, and a position of said predetermined symbol differs between a starting TTI and a TTI other than that starting TTI;
a correlation section 1110 that extracts a symbol in each subcarrier at TTI intervals from said frame, and performs the frequency domain multiplication of said synchronization sequence by extracted said symbol and calculates a correlation; and
a detection section that detects TTI timing based on a correlation value calculated by said correlation section, and outputs TTI timing information to said correlation section, wherein:
said correlation section multiplies said predetermined symbol by said synchronization sequence in accordance with said TTI timing information and calculates a correlation; and
said detection section identifies said starting TTI and a TTI other than that starting TTI based on a correlation value between said predetermined symbol and said synchronization sequence.

31. The mobile station apparatus according to claim 30, wherein:
said receiving section receives a frame in which said synchronization sequence is mapped with a position of said predetermined symbol changed for each said TTI; and
said detection section identifies each TTI based on a correlation value between said predetermined symbol and said synchronization sequence.

32. The mobile station apparatus according to claim 30, wherein:
said receiving section receives a frame in which said predetermined symbol in which said synchronization sequence is mapped is shifted for each subcarrier block and changed for each TTI; and
said detection section identifies each TTI based on a correlation value between said predetermined symbol and said synchronization sequence.
